(19) **Europäisches Patentamt / European Patent Office / Office européen des brevets**

(11) **EP 4 654 711 A1**

(12) **EUROPEAN PATENT APPLICATION**
published in accordance with Art. 153(4) EPC

(43) Date of publication:
26.11.2025 Bulletin 2025/48

(21) Application number: 24744224.7

(22) Date of filing: 16.01.2024

(51) International Patent Classification (IPC):
**H04W 72/0453** *(2023.01)*

(52) Cooperative Patent Classification (CPC):
**H04W 72/0453; H04W 72/53**

(86) International application number:
**PCT/CN2024/072435**

(87) International publication number:
**WO 2024/153048 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 16.01.2023 CN 202310073582

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Maiwald GmbH**
**Engineering**
**Elisenhof**
**Elisenstrasse 3**
**80335 München (DE)**

(54) **MULTI-CARRIER DATA PROCESSING METHOD, APPARATUS, TERMINAL, AND NETWORK SIDE DEVICE**

(57) Provided are a multi-carrier data processing method and apparatus, a terminal and a network device. The method includes: receiving, by the terminal, parameter information transmitted by a network device, where the parameter information includes parameter information corresponding to at least two scheduled carriers, and the at least two scheduled carriers correspond to the same transport block; and processing, by the terminal, the transport block corresponding to the at least two scheduled carriers according to the parameter information, where the parameter information includes at least one of the following: one or more values of modulation orders; one or more values of coding rates; one or more values of numbers of transmission layers; or one or more values of maximum numbers of MIMO transmission layers.

receiving, by the terminal, parameter information transmitted by a network-side device, where the parameter information includes parameter information corresponding to at least two scheduled carriers, and the at least two scheduled carriers correspond to a same transport block — 101

processing, by the terminal, the transport block corresponding to the at least two scheduled carriers according to the parameter information — 102

FIG. 1

**Description**

**CROSS-REFERENCE TO RELATED APPLICATION**

The present disclosure claims a priority of Chinese Patent Application No. 202310073582.5 entitled "multi-carrier data processing method and apparatus, terminal and network device" filed on January 16, 2023, the entire contents of which are hereby incorporated by reference in their entireties.

**TECHNICAL FIELD**

The present disclosure relates to the field of communications technologies, and in particular, to a multi-carrier data processing method and apparatus, a terminal and a network device.

**BACKGROUND**

Before transmitting a data transport block, processes such as modulation, layer mapping, antenna port mapping, and resource mapping need to be carried out. During bit-level data processing, parameters such as a modulation order and a coding rate need to be utilized. For a single-carrier scheduled transmission of the data transport block in the related technologies, these parameters are unique. However, for multi-carrier-based serving cells, parameter values corresponding to multiple carriers may be different. Consequently, the bit-level processing process in the related technologies is not applicable to scheduling scenarios involving multiple carriers.

**SUMMARY**

The objective of the present disclosure is to provide a multi-carrier data processing method and apparatus, a terminal and a network device, which solves a problem that the bit-level processing process in the related technologies is not suitable for scheduling scenarios under involving multiple carriers.
An embodiment of the present disclosure provides a multi-carrier data processing method, which includes:

receiving, by a terminal, parameter information transmitted by a network device, where the parameter information includes parameter information corresponding to at least two scheduled carriers, and the at least two scheduled carriers correspond to the same transport block; and
processing, by the terminal, the transport block corresponding to the at least two scheduled carriers according to the parameter information,
where the parameter information includes at least one of the following:

one or more values of modulation orders;
one or more values of coding rates;
one or more values of numbers of transmission layers; or
one or more values of maximum numbers of multiple input multiple output (MIMO) transmission layers.

Optionally, the processing the transport block corresponding to the at least two scheduled carriers includes: calculating a size of the transport block,
where the calculating the size of the transport block includes:

calculating a number of radio resources of the scheduled carriers;
determining an intermediate variable parameter according to the number of the radio resources; and
determining the size of the transport block according to the intermediate variable parameter.

Optionally, the number of the radio resources of the scheduled carriers is:

$$N_{RE} = \sum_{i=1}^{C}(N_{RE}(i)); \ N_{RE}(i) = min\left(156, N_{RE}^{'}(i)\right) * n_{PRB}(i)$$ , where C represents a number of the scheduled carriers, $i$ is an index of a scheduled carrier, $N_{RE}(i)$ is a number of radio resources corresponding to the scheduled carrier $i$, $n_{PRB}(i)$ represents a number of physical resource blocks (PRBs) of the scheduled carrier i, and $N_{RE}^{'}(i)$ represents a number of resource elements (REs) included in each PRB of the scheduled carrier i.

Optionally, parameters for calculating $N_{RE}^{'}$ corresponding to all the scheduled carriers are different, or parameters for calculating $N_{RE}^{'}$ corresponding to all the scheduled carriers are the same.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a number of transmission layers corresponding to each of the scheduled carriers is the same as a product of a modulation order and a number of transmission layers corresponding to each other of the scheduled carriers.

Optionally, in a case where all the scheduled carriers correspond to a same coding rate, the method further includes: determining a value of the same coding rate corresponding to all the scheduled carriers according to at least one of the following manners:

determining the value of the coding rate corresponding to all the scheduled carriers according to the parameter information, where values of coding rates of all the scheduled carriers indicated by the parameter information are the same;
determining the value of the coding rate corresponding to all the scheduled carriers according to a preset rule; or,
determining a value of a coding rate used for calculating the size of the transport block according to the parameter information.

Optionally, the determining the intermediate variable parameter for all the scheduled carriers according to the number of the radio resources includes: calculating the intermediate variable parameter for all the scheduled carriers according to the following formula: $N_{info} = \sum_{i=1}^{C}(N_{RE}(i) * R(i) * Q_m(i) * v(i))$, where $N_{info}$ represents the intermediate variable parameter for all the scheduled carriers, and $N_{RE}(i)$ is a number of radio resources corresponding to a scheduled carrier $i$, $R(i)$ is a coding rate corresponding to the scheduled carrier $i$, $Q_m(i)$ represents a modulation order corresponding to the scheduled carrier $i$, $v(i)$ represents a number of MIMO transmission layers corresponding to the scheduled carrier $i$, C represents a number of the scheduled carriers, and $i$ is an index of the scheduled carrier.

Optionally, the processing the transport block corresponding to the at least two scheduled carriers includes: determining a channel coding parameter, where the determining the channel coding parameter includes at least one of the following: determining a size of the transport block corresponding to a low density parity check (LDPC) base graph used for channel coding; or determining a coding rate corresponding to an LDPC base graph used for channel coding.

Optionally, the method further includes: receiving indication information transmitted by the network device, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processing the transport block corresponding to the at least two scheduled carriers includes: performing rate matching on the code block; where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the performing the bit selection according to the parameter information includes: calculating a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the method further includes at least one of the following:

determining a value of the modulation order used for calculating the circular buffer length according to the parameter information, or determining that a value of the modulation order used for calculating the circular buffer length is a maximum value of the modulation orders corresponding to the at least two scheduled carriers; and

determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

Optionally, the method further includes: determining the total number of the radio resources used for calculating the circular buffer length to be $156 \times n_{PRB}$, where $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers, where a manner for determining $N_{PRB,LBRM}$ includes:

determining a converted value corresponding to a number of PRBs of each of the scheduled carriers, and determining $N_{PRB,LBRM}$ as a sum of the converted values corresponding to the numbers of PRBs of all the scheduled carriers; or calculating a sum of numbers of PRBs of all the scheduled carriers, and converting the sum of the numbers of PRBs of all the scheduled carriers to obtain a value of $N_{PRB,LBRM}$.

Optionally, the performing the bit interleaving according to the parameter information includes: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to scheduling information and/or configuration information from the network device; or, the value of the modulation order used for the bit interleaving is determined according to a modulation order used for calculating the bit length of the code block.

An embodiment of the present disclosure provides a multi-carrier data processing method, which includes:

determining, by a network device, parameter information corresponding to at least two scheduled carriers, where the at least two scheduled carriers correspond to the same transport block;

processing, by the network device, the transport block corresponding to the at least two scheduled carriers according to the parameter information; and

transmitting, by the network device, the parameter information to a terminal, where the parameter information includes at least one of the following:

one or more values of modulation orders;
one or more values of coding rates;
one or more values of numbers of transmission layers; or
one or more values of maximum numbers of MIMO transmission layers.

Optionally, the processing the transport block corresponding to the at least two scheduled carriers includes: calculating a size of the transport block, where the calculating the size of the transport block includes: calculating a number of radio resources of the scheduled carriers; determining an intermediate variable parameter according to the number of the radio resources; and determining the size of the transport block according to the intermediate variable parameter.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;

all the scheduled carriers have different modulation orders, different coding rates, and different numbers of transmission layers; or

all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the values of the coding rates corresponding to all the scheduled carriers indicated by the parameter information are the same; or, the parameter information is used to indicate a value of a coding rate used for calculating the size of the transport block.

Optionally, the processing the transport block corresponding to the at least two scheduled carriers includes: determining a channel coding parameter, where the determining the channel coding parameter includes at least one of the following: determining a size of the transport block corresponding to an LDPC base graph used for channel coding; or determining a coding rate corresponding to an LDPC base graph used for channel coding.

Optionally, the method further includes: transmitting indication information to the terminal, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processing the transport block corresponding to the at least two scheduled carriers includes: performing rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the performing the bit selection according to the parameter information includes: calculating a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the parameter information is used to indicate the modulation order used for calculating the circular buffer length; or, the parameter information is used to indicate a parameter of a modulation and coding scheme for each of the scheduled carriers; and the parameter information is used to indicate the number of MIMO transmission layers used for calculating the circular buffer length; or, the parameter information is used to indicate a number of MIMO transmission layers for each of the scheduled carriers.

Optionally, the performing the bit interleaving according to the parameter information includes: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to a modulation order used for calculating the bit length of the code block.

An embodiment of the present disclosure provides a terminal, including: a memory, a transceiver, and a processor. The memory is configured to store a computer program; the transceiver is configured to receive and transmit data under the control of the processor; and the processor is configured to read the computer program from the memory to perform the following operations:

receiving parameter information transmitted by a network device, where the parameter information includes parameter information corresponding to at least two scheduled carriers, and the at least two scheduled carriers correspond to the same transport block; and
processing the transport block corresponding to the at least two scheduled carriers according to the parameter information, where the parameter information includes at least one of the following:

one or more values of modulation orders;
one or more values of coding rates;
one or more values of numbers of transmission layers; or
one or more values of maximum numbers of multiple input multiple output (MIMO) transmission layers.

Optionally, the processor is configured to read the computer program from the memory to perform the following operations: calculating a size of the transport block, where the calculating the size of the transport block includes:

> calculating a number of radio resources of the scheduled carriers;
> determining an intermediate variable parameter according to the number of the radio resources; and
> determining the size of the transport block according to the intermediate variable parameter.

Optionally, the number of the radio resources of the scheduled carriers is: $N_{RE} = \sum_{i=1}^{C}(N_{RE}(i))$;

$N_{RE}(i) = min(156, N_{RE}'(i)) * n_{PRB}(i)$, where C represents a number of the scheduled carriers, and i is an index of a scheduled carrier; $N_{RE}(i)$ is a number of radio resources corresponding to the scheduled carrier i; $n_{PRB}(i)$ represents a number of physical resource blocks (PRBs) of the scheduled carrier i; and $N_{RE}'(i)$ represents a number of resource elements (REs) included in each PRB of the scheduled carrier i.

Optionally, parameters for calculating $N_{RE}'$ corresponding to all the scheduled carriers are different, or parameters for calculating $N_{RE}'$ corresponding to all the scheduled carriers are the same.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

> all the scheduled carriers have a same modulation order, a same coding rate, and a same number of transmission layers;
> all the scheduled carriers have different modulation orders, different coding rates, and different numbers of transmission layers; or
> all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the processor is configured to read the computer program from the memory to perform the following operations: determining a value of a same coding rate corresponding to all the scheduled carriers according to at least one of the following manners:

> determining the value of the coding rate corresponding to all the scheduled carriers according to the parameter information, where values of coding rates of all the scheduled carriers indicated by the parameter information are the same;
> determining the value of the coding rate corresponding to all the scheduled carriers according to a preset rule; or, determining a value of a coding rate used for calculating the size of the transport block according to the parameter information.

Optionally, the processor is configured to read the computer program from the memory to perform the following operations: calculating the intermediate variable parameter for all the scheduled carriers according to the following formula: $N_{info} = \sum_{i=1}^{C}(N_{RE}(i) * R(i) * Q_m(i) * v(i))$, where $N_{info}$ represents the intermediate variable parameter for all the scheduled carriers, and $N_{RE}(i)$ is a number of radio resources corresponding to a scheduled carrier i; R(i) is a coding rate corresponding to the scheduled carrier i; $Q_m(i)$ represents a modulation order corresponding to the scheduled carrier i; v(i) represents a number of MIMO transmission layers corresponding to the scheduled carrier i; C represents a number of the scheduled carriers, and i is an index of the scheduled carrier.

Optionally, the processor is configured to read a computer program from the memory and perform the following operations: determining a channel coding parameter, where the determining the channel coding parameter includes at least one of the following: determining a size of the transport block corresponding to a low density parity check (LDPC) base graph used for channel coding; or determining a coding rate corresponding to an LDPC base graph used for channel coding.

Optionally, the processor is configured to read the computer program from the memory to perform the following operations: receiving indication information transmitted by the network device, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processor is configured to read the computer program from the memory to perform the following operations: performing rate matching on the code block; where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the processor is configured to read the computer program from the memory to perform the following operations:

calculating a circular buffer length according to the parameter information; and
performing the bit selection according to the circular buffer length,
where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the processor is configured to read a computer program from the memory and perform at least one of the following operations:

determining a value of the modulation order used for calculating the circular buffer length according to the parameter information, or determining that a value of the modulation order used for calculating the circular buffer length is a maximum value of the modulation orders corresponding to the at least two scheduled carriers; and
determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

Optionally, the processor is configured to read the computer program from the memory to perform the following operations: determining the total number of the radio resources used for calculating the circular buffer length to be $156 \times n_{PRB}$, where $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers, where a manner for determining $N_{PRB,LBRM}$ includes: determining a converted value corresponding to a number of PRBs of each of the scheduled carriers, and determining $N_{PRB,LBRM}$ as a sum of the converted values corresponding to the numbers of PRBs of all the scheduled carriers; or calculating a sum of numbers of PRBs of all the scheduled carriers, and converting the sum of the numbers of PRBs of all the scheduled carriers to obtain a value of $N_{PRB,LBRM}$.

Optionally, the processor is configured to read the computer program in the memory and perform the following operations: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to scheduling information and/or configuration information from the network device; or, the value of the modulation order used for the bit interleaving is determined according to a modulation order used for calculating the bit length of the code block.

An embodiment of the present disclosure provides a network device, including: a memory, a transceiver, and a processor. The memory is configured to store a computer program; the transceiver is configured to receive and transmit data under the control of the processor; and the processor is configured to read the computer program from the memory to perform the following operations:

determining parameter information corresponding to at least two scheduled carriers, where the at least two scheduled carriers correspond to the same transport block;

processing, the transport block corresponding to the at least two scheduled carriers according to the parameter information; and

transmitting the parameter information to a terminal, where the parameter information includes at least one of the following:

one or more values of modulation orders;
one or more values of coding rates;
one or more values of numbers of transmission layers; or
one or more values of maximum numbers of MIMO transmission layers.

Optionally, the processor is configured to read the computer program from the memory to perform the following operations: calculating a size of the transport block, where the calculating the size of the transport block includes: calculating a number of radio resources of the scheduled carriers; determining an intermediate variable parameter according to the number of the radio resources; and determining the size of the transport block according to the intermediate variable parameter.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the values of the coding rates corresponding to all the scheduled carriers indicated by the parameter information are the same; or, the parameter information is used to indicate a value of a coding rate used for calculating the size of the transport block.

Optionally, the processor is configured to read the computer program from the memory to perform the following operations: determining a channel coding parameter, where the determining the channel coding parameter includes at least one of the following: determining a size of the transport block corresponding to an LDPC base graph used for channel coding; or determining a coding rate corresponding to an LDPC base graph used for channel coding.

Optionally, the processor is configured to read the computer program from the memory to perform the following operations: transmitting indication information to the terminal, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processor is configured to read the computer program from the memory to perform the following operations: performing rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the performing the bit selection according to the parameter information includes: calculating a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the parameter information is used to indicate the modulation order used for calculating the circular buffer length; or, the parameter information is used to indicate a parameter of a modulation and coding scheme for each of the scheduled carriers; and the parameter information is used to indicate the number of MIMO transmission layers used for calculating the circular buffer length; or, the parameter information is used to indicate a number of MIMO transmission layers for each of the scheduled carriers.

Optionally, the processor is configured to read the computer program from the memory to perform the following operations: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to a modulation order used for calculating the bit length of the code block.

An embodiment of the present disclosure provides a multi-carrier data processing apparatus, including:

a first receiving unit, configured to receive parameter information transmitted by a network device, where the parameter information includes parameter information corresponding to at least two scheduled carriers, and the at least two scheduled carriers correspond to the same transport block; and
a first processing unit, configured to process the transport block corresponding to the at least two scheduled carriers according to the parameter information, where the parameter information includes at least one of the following:
one or more values of modulation orders;
one or more values of coding rates;
one or more values of numbers of transmission layers; or
one or more values of maximum numbers of MIMO transmission layers.

An embodiment of the present disclosure provides a multi-carrier data processing apparatus, including:

a first determining unit, configured to determine parameter information corresponding to at least two scheduled carriers, where the at least two scheduled carriers correspond to the same transport block;
a second processing unit, configured to process the transport block corresponding to the at least two scheduled carriers according to the parameter information; and
a first transmitting unit, configured to transmit the parameter information to a terminal, where the parameter information includes at least one of the following:

one or more values of modulation orders;
one or more values of coding rates;
one or more values of numbers of transmission layers; or
one or more values of maximum numbers of MIMO transmission layers.

An embodiment of the present disclosure provides a processor readable storage medium, which stores a computer program. The computer program is executed by a processor to perform the above multi-carrier data processing method

The above technical solution of the present invention have the following beneficial effects. In the embodiments of the present disclosure, the terminal can process data of multiple scheduled carriers according to parameter information of the multiple scheduled carriers transmitted by the network device, and the multiple scheduled carriers correspond to the same transport block. In the embodiments of the present disclosure, a bit-level processing process may be executed in the case of SCOMX (Serving cell over multi-resource, SCOMX), which can realize a processing technical solution for transmitting a data transport block in a case where different carriers are configured with a same parameter or different parameters, thereby ensuring scheduling flexibility. An appropriate transmission parameter is selected for each carrier according to an actual channel condition, which can effectively improve the transmission efficiency of radio resources. In addition, the present disclosure has relatively small modifications to the protocol, which can minimize the complexity of the terminal.

## BRIEF DESCRIPTION OF THE DRAWINGS

FIG. 1 is a first schematic flow chart of a multi-carrier data processing method according to an embodiment of the present disclosure;
FIG. 2 is a schematic diagram of a SCOMX according to an embodiment of the present disclosure;
FIG. 3 is a second schematic flow chart of a multi-carrier data processing method according to an embodiment of the present disclosure;

FIG. 4 is a first schematic structural diagram of a multi-carrier data processing apparatus according to an embodiment of the present disclosure;

FIG. 5 is a second structural diagram of a multi-carrier data processing apparatus according to an embodiment of the present disclosure;

FIG. 6 is a schematic structural diagram of a terminal according to an embodiment of the present disclosure; and

FIG. 7 is a schematic structural diagram of a network device according to an embodiment of the present disclosure.

## DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications may be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics may be combined in one or more embodiments in any suitable manner.

In various embodiments of the present disclosure, it should be appreciated that the size of a sequence number of each of the following processes does not imply the order of execution, and the execution order of each process should be determined according to the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which may represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and according to these embodiments, a person of ordinary skill in the art may obtain other embodiments without creative effort, which shall also fall within the scope of the present disclosure.

Embodiments of the present disclosure provide a multi-carrier data processing method and apparatus, a terminal and a network device, to solve a problem that the bit-level processing process in the related technologies is not suitable for scheduling scenarios under involving multiple carriers.

The method and the apparatus are according to the same application concept. Since principles for the method and the apparatus to solve the problem are similar, implementations of the apparatus and the method may refer to each other, and the repeated parts will not be described.

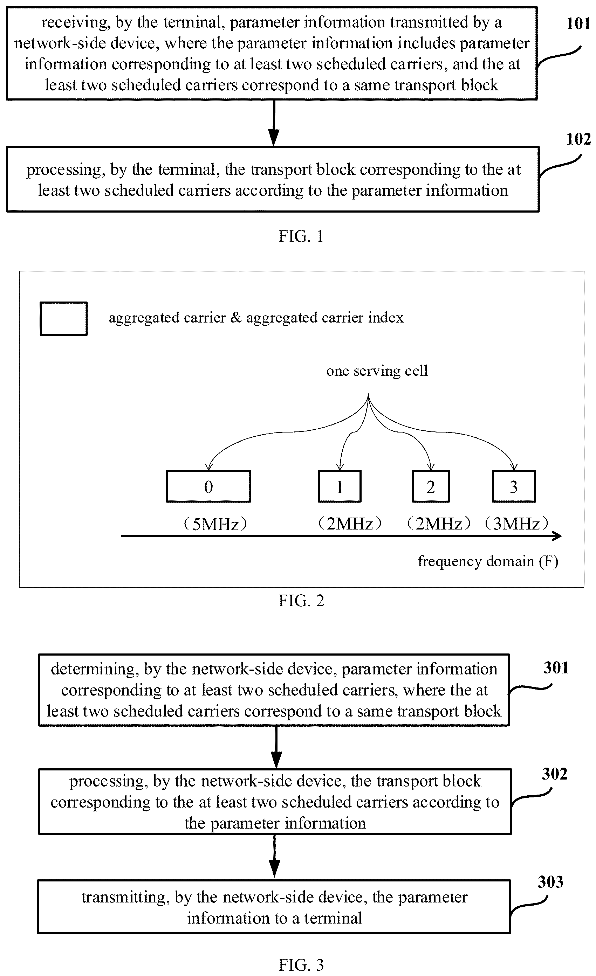

As shown in FIG. 1, an embodiment of the present disclosure provides a multi-carrier data processing method, which is applied to a terminal and specifically includes the following steps.

Step 101: receiving, by the terminal, parameter information transmitted by a network device, where the parameter information includes parameter information corresponding to at least two scheduled carriers, and the at least two scheduled carriers correspond to the same transport block.

In the embodiment, the network device may transmit the parameter information to the terminal through scheduling information and/or configuration information. The parameter information includes parameters of multiple scheduled carriers. The scheduling information may be relevant information of carriers scheduled by the network device; the configuration information may be relevant configuration information of the carriers scheduled by the network device. The scheduling information is, for example, data transmission indication information of multiple carriers. The at least two scheduled carriers may be multiple carriers in a scenario of serving cell over multi-carriers (SCOMX), and in this scenario, transport blocks corresponding to the multiple carriers are the same. In the SCOMX scenario, one cell corresponds to multiple carriers, values of the same parameter corresponding to the multiple carriers may be the same or different. For example, modulation orders corresponding to different scheduled carriers may be different, coding rates corresponding to different scheduled carriers may be different, and layer indications (i.e., the number of transmission layers) corresponding to different scheduled carriers may be different.

In the SCOMX scenario, a serving cell may include multiple carriers (carriers)/licensed bands (bands)/unlicensed bands/frequency-domain resource blocks, or different code-domain resources; SCOMX may be referred to as a multi-carrier cell, which represents a cell configuration method designed to reduce terminal multi-carrier capability requirements while improving data transmission throughput and reducing common signaling header overhead. The core concept is that a single serving cell encompasses multiple carriers. In this scenario, when a transport block is transmitted across multiple carriers, parameters for each scheduled carrier may vary. However, at the bit-level processing stage, each parameter must have a unique value. This disclosure presents a bit-level processing procedure for transport blocks when a parameter may have multiple values. From perspective of a higher-layer service management, only one serving cell is managed. However, during data transmission for this serving cell, multiple carriers may be utilized, meaning physical layer resources being mapped to multiple carriers. Carriers belonging to a single serving cell may be termed integrated carriers, as illustrated in FIG. 2.

The network device indicates a value of a parameter corresponding to each of the carriers.

The parameter information includes at least one of the following.

1) One or more values of modulation orders. If the parameter information indicates one value of the modulation order, it may indicate that modulation orders corresponding to the at least two scheduled carriers are the same; if multiple values of the modulation orders are indicated, it indicates that the modulation orders corresponding to the at least two scheduled carriers are different, which may include modulation orders corresponding to all the scheduled carriers different from each other, or may include a modulation order corresponding to some of the scheduled carriers and another modulation order corresponding to some other of the scheduled carriers, which is not limited here.

2) One or more values of coding rates. If the parameter information indicates one value of the coding rate, it may indicate that the coding rates corresponding to the at least two scheduled carriers are the same; if multiple values of the coding rates are indicated, it indicates that the coding rates corresponding to the at least two scheduled carriers are different. Specifically, the coding rates corresponding to all the scheduled carriers are different from each other, or the coding rates corresponding to some of the scheduled carriers are different from each other, which is not limited here.

3) One or more values of numbers of transmission layers, if the parameter information indicates one value of the number of transmission layers, it may indicate that the at least two scheduled carriers have the same number of transmission layers; if multiple values of the number of transmission layers are indicated, it indicates that the numbers of transmission layers corresponding to the at least two scheduled carriers are different from each other. Specifically, the numbers of transmission layers corresponding to all the scheduled carriers are different from each other, or that the numbers of transmission layers corresponding to some of the scheduled carriers are different from each other, which is not limited here.

4) One or more values of maximum numbers of multiple-input multiple-output MIMO transmission layers (maxMIMO-Layer). If the parameter information indicates one value of the maximum number of MIMO transmission layers, it may indicate that the maximum numbers of MIMO transmission layers corresponding to the at least two scheduled carriers are the same; if multiple values of the maximum number of MIMO transmission layers are indicated, it indicates that the maximum numbers of MIMO transmission layers corresponding to the at least two scheduled carriers are different. Specifically, the maximum numbers of MIMO transmission layers corresponding to all the scheduled carriers are different from each other, or that the maximum numbers of MIMO transmission layers corresponding to some of the scheduled carriers are different from each other, which is not limited here.

Step 102: processing, by the terminal, the transport block corresponding to the at least two scheduled carriers according to the parameter information.

The terminal may process one or more data of at least one information indicated by the scheduling information and/or the configuration information, thereby implementing data processing for multiple scheduled carriers. The data processing may be bit-level processing.

In the embodiments of the present disclosure, the terminal can process data of multiple scheduled carriers according to the parameter information of the multiple scheduled carriers transmitted by the network device, and the multiple scheduled carriers correspond to the same transport block. In the embodiments of the present disclosure, a bit-level processing process may be executed in the case of SCOMX, which can realize a processing technical solution for transmitting a data transport block in a case where different carriers are configured with a same parameter or different parameters, thereby ensuring scheduling flexibility. An appropriate transmission parameter is selected for each carrier according to an actual channel condition, which can effectively improve the transmission efficiency of radio resources. In addition, the present disclosure has relatively small modifications to the protocol, which can minimize the complexity of the terminal.

As an optional embodiment, the processing includes at least one of the following:

(1) calculating a size of the transport block;

(2) determining a channel coding parameter, which may include selecting a base graph; or

(3) performing rate matching on the code block, which may include one or more processes such as calculating a bit length of the code block, performing bit selection, and performing bit interleaving.

In the embodiment, the processing of the transport block by the terminal may include one or more processes such as calculating the size of the transport block, determining the channel coding parameter, and performing rate matching on the code blocks after the transport block is divided.

The following is a detailed description of each of the above processes.

As an optional embodiment, the processing the transport block corresponding to the at least two scheduled carriers includes: calculating the size of the transport block.

The calculating the size of the transport block includes the following steps.

Step 1: calculating the number of radio resources of the scheduled carriers;

In the embodiment, the number of the radio resources may be a number of REs. When calculating the size of the transport block, the number of REs included in all time-domain symbols or all frequency-domain resources scheduled by the network device may be calculated first. If the network device schedules multiple carriers, a total number of radio resources of all the scheduled carriers is calculated.

Optionally, the number of the radio resources of the scheduled carriers is: $N_{RE} = \sum_{i=1}^{C}(N_{RE}(i))$ ;

$N_{RE}(i) = min(156, N_{RE}^{'}(i)) * n_{PRB}(i)$ ; where C represents a number of the scheduled carriers, $i$ is an index of a scheduled carrier; $N_{RE}(i)$ is a number of radio resources corresponding to the scheduled carrier $i$; $n_{PRB}(i)$ represents a number of physical resource blocks (PRBs) of the scheduled carrier i; and $N_{RE}^{'}(i)$ represents a number of resource elements (REs) included in each PRB of the scheduled carrier i.

Optionally, parameters for calculating $N_{RE}^{'}$ corresponding to all the scheduled carriers are different (which may be configured separately by the network device), or parameters for calculating $N_{RE}^{'}$ corresponding to all the scheduled carriers are the same. The parameters for calculating $N_{RE}^{'}$ may be as follows.

The $N_{RE}^{'}(i)$ is calculated according to the following formula: $N_{RE}^{'} = N_{sc}^{RB} \cdot N_{symb}^{sh} - N_{DMRS}^{PRB} - N_{oh}^{PRB}$ . The parameters for calculating $N_{RE}^{'}$ include $N_{sc}^{RB}, N_{symb}^{sh}, N_{DMRS}^{PRB}, N_{oh}^{PRB}$ , where $N_{symb}^{sh}$ is the number of scheduled time-domain symbols corresponding to the scheduled carrier; $N_{sc}^{RB}$ is the number of REs included in one PRB, and the value of $N_{sc}^{RB}$ is 12; $N_{DMRS}^{PRB}$ is the number of REs used to carry DMRS in each PRB corresponding to the scheduled carrier; and $N_{oh}^{PRB}$ is another overhead in each PRB corresponding to the scheduled carrier. The parameters of each scheduled carrier are configured separately by the network device, or the same parameters are used by multiple scheduled carriers. For example, the network device configures $N_{DMRS}^{PRB}$ and $N_{oh}^{PRB}$ separately for multiple scheduled carriers, parameters of a carrier with the smallest or largest index are used for all the scheduled carriers.

Step 2: determining an intermediate variable parameter according to the number of the radio resources.

In the embodiment, the terminal may calculate the intermediate variable parameter $N_{info}$ according to the number of radio resources of all the scheduled carriers. The intermediate variable parameter $N_{info}$ is an intermediate variable used for calculating the size of the transport block (TB). The intermediate variable parameter $N_{info}$ is calculated as follows: $N_{info} = N_{RE} \cdot R \cdot Q_m \cdot v$. The above formula is a method for calculating the intermediate variable parameter $N_{info}$ according to a total number of the radio resources of all the scheduled carriers, R is a coding rate, which may be determined according to a modulation and coding scheme (Modulation and Coding Scheme, MCS) indication in a scheduling signaling of the network device; $Q_m$ is a modulation order (determined according to the MCS indication in the scheduling signaling of the network device); v is a layer indication indicating MIMO (determined according to the scheduling signaling of the network device).

If $N_{info} \leq 3824$, manner 1 in step 3 below is used to determine the size of the transport block; otherwise, manner 2 in step 3 below is used to determine the size of the transport block.

Step 3: determining the size of the transport block according to the intermediate variable parameter.

Manner 1: if the intermediate variable parameter $N_{info} \leq 3824$, the method for determining the transport block size (TBS) includes: determining the intermediate variable $N'_{info} = \max\left(24, 2^n \cdot \left\lfloor \frac{N_{info}}{2^n} \right\rfloor\right)$, where $n = \max\left(3, \lfloor \log_2(N_{info}) \rfloor - 6\right)$; and using Table 1 to look up a value closest to and not less than $N_{info}$ as the size of the transport block.

Table 1: transport block size (TBS) ($N_{info} \leq 3824$)

| index | TBS | index | TBS | index | TBS | index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Manner 2: if $N_{info} > 3824$, the method for determining the transport block size (TBS) includes:

determining an intermediate variable $N'_{info} = \max\left(3820,\ 2^n \times round\left\lfloor\frac{N_{info}-24}{2^n}\right\rfloor\right)$ , where

$n = \left\lfloor\log_2(N_{info} - 24)\right\rfloor - 5$ , and *round*⌊⌋ represents rounding down;

if $R \le \frac{1}{4}$ (*R* is the coding rate determined according to the scheduling information of the network device),

determining $TBS = 8 \cdot S \left\lceil\frac{N'_{info}+24}{8\cdot C}\right\rceil - 24$ , where $S = \left\lceil\frac{N'_{info}+24}{3816}\right\rceil$ ; and

if $R > \frac{1}{4}$ , and $N'_{info} > 8424$ , determining $TBS = 8 \cdot S \left\lceil\frac{N'_{info}+24}{8\cdot C}\right\rceil - 24$ , where

$S = \left\lceil\frac{N'_{info}+24}{8424}\right\rceil$ ; otherwise ( $R > \frac{1}{4}$ , and $N'_{info} \le 8424$ ), determining

$TBS = 8 \cdot \left\lceil\frac{N'_{info}+24}{8}\right\rceil - 24$ .

The value of R in manner 2 may be determined in one of the following manners.

1) The values of *R* of the multiple scheduled carriers indicated by the network device are all greater than the highest threshold in the above determining steps (for example, greater than 1/4), or are all less than or equal to the lowest threshold of in the above determining steps (for example, less than or equal to 1/4).
2) The value of *R* for determining a quantized intermediate variable parameter $N_{info}$ in the above step 2 is applied to manner 2.

Optionally, in the above embodiment, in a case of calculating the size of the transport block, the parameter information corresponding to the at least two scheduled carriers satisfies the following conditions: a product of target parameters corresponding to each of the scheduled carriers is the same as a product of target parameters corresponding to each other of the scheduled carriers, where the product of the target parameters corresponding to each of the scheduled carriers being the same as the product of target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

In the embodiment, the target parameters include: the modulation order, the coding rate and the number of transmission layers. In a case that the products of the target parameters corresponding to all the scheduled carriers are the same, the size of the transport block is calculated by using the method in steps 1 to 3 above. Assuming that the products of $Q_m * R * v$ of all the scheduled carriers are the same, the following situations may be included:

case 1: all the scheduled carriers have the same $Q_m$, the same R, and the same v, i.e., to use one set of scheduling parameters;
case 2: three parameters of all the scheduled carriers are different, but a product of the three parameters of each scheduled carrier is the same as a product of the three parameters of each other scheduled carrier; and
case 3: values of $Q_m * v$ of all the scheduled carriers are the same (values of $Q_m$ are different, values of *v* are different), and values of R are the same.

Optionally, in a case that all the scheduled carriers correspond to a same coding rate (for example, the above case 3), the method further includes: determining a value of the same coding rate corresponding to all the scheduled carriers according to at least one of the following manners.

Manner a: determining the value of the coding rate corresponding to all the scheduled carriers according to the parameter information, where values of coding rates of all the scheduled carriers indicated by the parameter information are the same; that is, the network device indicates an R value of each scheduled carrier through scheduling information and/or configuration information, and the R values of different scheduled carriers indicated are the same.

Manner b: determining the value of the coding rate corresponding to all the scheduled carriers according to a preset rule; that is, the terminal determines one R value for all the scheduled carriers according to a preset protocol rule. For example, an R value of a scheduled carrier having the smallest or largest index is determined as the R value for all the scheduled carriers. Alternatively, for example, a maximum R value, or a minimum R value, or an average value among multiple R values of the multiple scheduled carriers is determined as the R value for all the scheduled carriers.

Manner c: determining a value of a coding rate used for calculating the size of the transport block according to the parameter information. That is, the network device separately indicates the R value used for calculating the size of the transport block in scheduling signaling and/or configuration information.

Optionally, the R value determined by the above manners a to c is applicable to the step of determining the intermediate variable parameter in the above step 2.

Optionally, the R value determined by the above manners a to c is applicable to the R value in the method for determining the size of the transport block when $N_{info} > 3824$ (the manner 2 in step 3).

Optionally, the R value determined by the above manners a to c is applicable to the step of selecting the base graph when determining the channel coding parameter.

As another optional embodiment, the calculating the size of the transport block includes the following steps.

Step A: calculating the number $N_{RE}(i)$ of radio resources of each scheduled carrier. The number $N_{RE}(i)$ of the radio resources is the number of REs included in all time-domain symbols or all frequency-domain resources of carrier i scheduled by the network device. The $N_{RE}(i)$ is calculated as follows: $N_{RE}(i) = min\left(156, N_{RE}^{'}(i)\right) * n_{PRB}(i)$, where $n_{PRB}(i)$ is the number of PRBs of scheduled carrier $i$, $n_{PRB}(i)$ is the number of REs included in each PRB of the scheduled carrier $i$; $N_{RE}^{'}(i)$ is calculated as follows: $N_{RE}^{'} = N_{sc}^{RB} \cdot N_{symb}^{sh} - N_{DMRS}^{PRB} - N_{oh}^{PRB}$, where $N_{sc}^{RB} = 12$, $N_{symb}^{sh}$ is the number of scheduled time-domain symbols corresponding to the scheduled carrier; $N_{DMRS}^{PRB}$ is the number of REs used to carry a demodulation reference signal (DMRS) in each PRB corresponding to the scheduled carrier. $N_{oh}^{PRB}$ is another overhead in each PRB corresponding to the scheduled carrier. The parameter of each scheduled carrier are configured separately by the network device, or the same parameter is used for the scheduled carriers. For example, the network device configures $N_{DMRS}^{PRB}$ and $N_{oh}^{PRB}$ separately for multiple scheduled carriers, and a parameter of a carrier with the smallest or largest index is used for all the scheduled carriers.

Step B: determining the intermediate variable parameter $N_{info}$ of all the scheduled carriers according to the number of the radio resources, where the intermediate variable parameter $N_{info}$ is an intermediate variable for calculating the TB size. The calculation method of the intermediate variable parameter $N_{info}$ is as follows: $N_{info} = N_{RE} \cdot R \cdot Q_m \cdot v$.

For multi-carrier scheduling of a SCOMX cell, optionally, the determining the intermediate variable parameter for all the scheduled carriers according to the number of the radio resources includes: calculating the intermediate variable parameter for all the scheduled carriers according to the following formula: $N_{info} = \sum_{i=1}^{C} (N_{RE}(i) * R(i) * Q_m(i) * v(i))$, where $N_{info}$ represents the intermediate variable parameter for all the scheduled carriers, $N_{RE}(i)$ is a number of radio resources corresponding to a scheduled carrier $i$, $R(i)$ is a coding rate corresponding to the scheduled carrier $i$, $Q_m(i)$ represents a modulation order corresponding to the scheduled carrier $i$, $v(i)$ represents a number of MIMO transmission layers corresponding to the scheduled carrier $i$, $C$ represents a number of the scheduled carriers, and i is an index of the scheduled carrier.

Step C: determining the size of the transport block according to the intermediate variable parameter.

In the embodiment, if $N_{info} \leq 3824$, the size of the transport block is determined according to method (A); otherwise, the size of the transport block is determined according to method (B).

Method (A): if $N_{info} \leq 3824$, the method for determining the size of the transport block includes: determining the intermediate variable $N_{info}^{'} = \max \left(24, 2^n \cdot \left\lfloor \frac{N_{info}}{2^n} \right\rfloor\right)$, where $n = max\left(3, \left\lfloor \log_2\left(N_{info}\right) \right\rfloor - 6\right)$; and

using Table 1 to look up a value closest to and not less than $N'_{info}$ as the size of the transport block.

Method (B): if $N_{info} > 3824$, the method for determining the size of the transport block (TBS) includes:

determining the intermediate variable $N'_{info} = \max\left(3820,\ 2^n \times\ round\left\lfloor\frac{N_{info}-24}{2^n}\right\rfloor\right)$ , where

$$n = \left\lfloor \log_2\left(N_{info} - 24\right)\right\rfloor - 5$$ , and *round* $\lfloor\ \rfloor$ means rounding down;

1) if $R \le \frac{1}{4}$ (R is the coding rate determined according to the scheduling information of the network device),

determining $TBS = 8 \cdot S \left\lceil\frac{N'_{info}+24}{8 \cdot C}\right\rceil - 24$ , where $S = \left\lceil\frac{N'_{info}+24}{3816}\right\rceil$ ; and

2) if $R > \frac{1}{4}$ , and $N'_{info} > 8424$ , determining $TBS = 8 \cdot S \left\lceil\frac{N'_{info}+24}{8 \cdot C}\right\rceil - 24$ , where

$S = \left\lceil\frac{N'_{info}+24}{8424}\right\rceil$ ; otherwise ( $R > \frac{1}{4}$ , and $N'_{info} \le 8424$ ), determining

$$TBS = 8 \cdot \left\lceil\frac{N'_{info}+24}{8}\right\rceil - 24 .$$

The R value may be determined in one of the following manners.

1) The R values of the multiple scheduled carriers indicated by the network device are all greater than the highest threshold in the above determining steps (for example, greater than 1/4), or are all less than or equal to the lowest threshold of in the above determining steps (for example, less than or equal to 1/4).
2) The R value for determining a quantized intermediate variable parameter $N_{info}$ in the above step 2 is applied to manner (B).

Optionally, in the above embodiment, when calculating the size of the transport block, the parameter information corresponding to the scheduled carrier satisfies the following condition: products of target parameters corresponding to all the scheduled carriers are different. That is, in the embodiment, if a product of a modulation order, a modulation order, and the number of transmission layers of a scheduled carrier is different from a product of a modulation order, a modulation order, and the number of transmission layers of another scheduled carrier, the method of steps A to C above is used for calculating the size of the transport block.

Optionally, the method further includes: determining a value of a coding rate $R(i)$ corresponding to each of the scheduled carriers according to at least one of the following manners.

Manner d: determining the value of the coding rate corresponding to each of the scheduled carriers according to scheduling information and/or configuration information, and the values of the coding rates corresponding to all the scheduled carrier indicated by the scheduling information and/or the configuration information are different. That is, the network device indicates an R value of each scheduled carrier through the scheduling information and/or the configuration information, and different scheduled carriers correspond to different R values.

Manner e: determining the value of the coding rate corresponding to each of the scheduled carriers according to scheduling information and/or configuration information, and the values of the coding rates corresponding to all the scheduled carriers indicated by the scheduling signaling are the same. That is, the network device indicates an R value of each scheduled carrier through the scheduling information and/or configuration information, and R values of different scheduled carriers are the same.

Manner f: determining the value of the coding rate corresponding to all the scheduled carriers according to a preset rule. The terminal determines an R value for all the scheduled carriers according to a preset protocol rule. For example, an R value of a scheduled carrier having the smallest or largest index is determined as the R value for all the scheduled carriers. Alternatively, for example, a maximum R value, or a minimum R value, or an average value among multiple R values of the multiple scheduled carriers is determined as the R value for all the scheduled carriers.

Manner g: determining a value of a coding rate used for calculating the size of the transport block according to scheduling information and/or configuration information. That is, the network device separately indicates the R value used for calculating the size of the transport block in the scheduling signaling and/or the configuration information.

Optionally, the R value determined by the above manners d to g is applicable to the step of determining the intermediate variable parameter in the above step B.

Optionally, the R value determined by the above manners d to g is applicable to the R value in the method for determining the size of the transport block when $N_{info} > 3824$ (i.e., the manner B in the step C).

Optionally, the R value determined by the above manners d to g is applicable to the step of selecting a base graph when determining the channel coding parameter.

As an optional embodiment, the processing the transport block corresponding to the at least two scheduled carriers include: determining a channel coding parameter. The determining of the channel coding parameter includes at least one of the following: determining a size of the transport block corresponding to a low density parity check (LDPC) base graph used for channel coding; or determining a coding rate corresponding to an LDPC base graph used for channel coding.

In the embodiment, the terminal may perform channel coding according to the size of the transport block and the coding rate. The channel coding includes selecting an LDPC base graph.

The LDPC method is used for channel coding of data. For an initial transmission of the data block, it is necessary to determine and select a base graph (select base graph 1 or select base graph 2) before encoding. The method of selecting the base graph is determined according to the size $A$ of the transport block and the coding rate R.

The calculation process of the size of the transport block is not described here, and the coding rate R is indicated according to scheduling information and/or configuration information of the network device. Specifically, in a case that the size $A$ of the transport block and the coding rate R satisfy one of the following conditions, the base graph 2 (LDPC base graph 2) is determined as the base graph; otherwise, the base graph 1 (LDPC base graph 1) is determined as the base graph. The conditions are as follows:

1)

$$A \leq 292;$$

2)

$$A \leq 3824 \ \text{ and } \ R \leq 0.67;$$

3)

$$R \leq 0.25.$$

For SCOMX scheduling, when scheduling multiple carriers, for the parameters A and R used in the above base graph determination process, the determination method may include the following steps.

For a numerical value of A, optionally, the method further includes: receiving indication information transmitted by the network device, where the indication information is used to indicate that a size of the transport block is less than or equal to a first threshold, or to indicate that a size of the transport block is greater than a second threshold, where the second threshold is greater than the first threshold.

For example, the first threshold is 292, and the second threshold is 3824. When the network device schedules the transport block, if the size A of the scheduled transport block satisfies the condition of A ≤ 292, or satisfies the condition of A > 3824, the selection of the base graph can be ensured to be independent of the value of the code rate R.

Optionally, for the value of $R$, the coding rates corresponding to all the scheduled carriers are greater than the third threshold; or, the coding rates corresponding to all the scheduled carriers are less than or equal to the fourth threshold. The first threshold may be the highest threshold for the above determination step for R (such as 0.67), and the fourth threshold may be the lowest threshold for the above determination step for R (such as 0.25).

In the embodiment, the $R$ of each of the multiple scheduled carriers indicated by the network device may be greater than the highest threshold in the above determination step (such as greater than 0.67), or may be less than the lowest threshold in the above determination step (such as less than or equal to 0.25).

b) The value of R when determining the intermediate variable parameter $N_{info}$ in the process of calculating the size of the transport block is used as the value of R in this embodiment.

Optionally, after performing channel coding on the transport block, the method further includes: performing code block segmentation on the transport block.

Before performing code block segmentation, a cyclic redundancy check (cyclic redundancy check, CRC) is added to the length A of the transport block. The transport blocks after CRC addition become: $b_0, b_1, b_2, b_3, ... , b_{B-1}$, B is the length (including a CRC bit).

The transmitter performs code block segmentation on the transport block and adds a CRC to each code block. The output of each code block is: $c_{r0}, c_{r1}, c_{r2}, c_{r3}, ... , c_{r(K_r-1)}$, where r represents an index of the segmented code block, $K_r$ is the bit length of code block r, and the number of code blocks segmented from each transport block is denoted as r.

When performing code block segmentation and CRC addition, it is necessary to determine a maximum code block size (maximum code block size). The maximum code block size is related to the selection of the base graph, and is as follows:

for base graph 1, the maximum code block size $K_{cb}$ = 8448; and
for base graph 2, the maximum code block size $K_{cb}$ = 3840.

For SCOMX cell scheduling, the selection process of the base graph is not described in detail here.

Optionally, after performing code block segmentation on the transport block, the method further includes: performing channel coding on the code block.

The transmitter performs channel coding on one or more code blocks output after the code block segmentation, and the input of the channel coding is: $c_{r0}, c_{r1}, c_{r2}, c_{r3}, ... , c_{r(K_r-1)}$), where $r$ represents an index of the segmented code block, and $K_r$ represents the bit length of code block r.

The output of the channel coding is: $d_{r0}, d_{r1}, d_{r2}, d_{r3}, ... , d_{r(N_r-1)}$, where $N_r$ is the bit length of the output of the channel coding. The value of $N_r$ is related to the selection of the base graph. The following calculation method of $N$ may be applied to the calculation of $N_r$:

for base graph 1, $N = 66Z_c$; and
for base graph 2, $N = 50Z_c$.

The above $Z_c$ is a parameter of LDPC channel coding, which is determined according to the length of the code block and a parameter of the base graph.

The process of selecting the base graph is not described in detail here.

As an optional embodiment, processing the transport block corresponding to the at least two scheduled carriers includes: performing rate matching on the code block; where the performing the rate matching on the code block includes at least one of the following steps:

step D: calculating a bit length of a code block subjected to the rate matching according to a reference value of the modulation order, a reference value of the number of transmission layers, and a transmission bit length obtained across all the scheduled carriers;
step E: performing bit selection according to the parameter information; or
step F: performing bit interleaving according to the parameter information.

In the embodiment, the rate matching includes three sub-processes: calculating the length $E_r$ of the code block, bit selection (Bit selection), and bit interleaving.

The input of the rate matching of each code block is: $d_{r0}, d_{r1}, d_{r2}, d_{r3}, ... , d_{r(N_r-1)}$, where r represents an index of a segmented code block, and $N_r$ is a bit length of the encoded output. The output of the rate matching is: $e_0, e_1, e_2, e_3, ... , e_{E-1}$, where E is the bit length of a bit-selected code block r, which may also be expressed as and $E_r$. The $E_r$ is calculated as follows.

It is assumed that the code block in the rate matching process is numbered as the jth code block, if

$$j \leq M' - mod\left(\frac{G}{N_L \cdot Q_m}, \ M'\right) - 1, \ E_r = N_L \cdot Q_m \left\lfloor \frac{G}{N_L \cdot Q_m \cdot M'} \right\rfloor \qquad ; \qquad \text{otherwise,}$$

$$E_r = N_L \cdot Q_m \left\lceil \frac{G}{N_L \cdot Q_m \cdot M'} \right\rceil$$, where $N_L$ is a number of transmission layers of the transmission (which may be determined according to scheduling information and/or configuration information). For SCOMX cell scheduling, $N_L$ takes a reference value (expressed as $ref\_N_L$); and $Q_m$ is a modulation order (which may be determined according to scheduling information and/or configuration information). For SCOMX cell scheduling, $Q_m$ takes a reference value (expressed as $ref\_Q_m$); G is an available transmission bit length. For SCOMX cell scheduling, G is an available transmission bit length across all the scheduled carriers (i.e., the number of bits that can be carried by actual available RE resources scheduled). The value of G is a reference value (denoted as $ref\_G$). $M' = M$, where M is the number of code blocks (it should be noted that when performing code block group (Code Block Group, CBG) transmission, values of M' and M may be different).

In the embodiment, the method for determining $ref\_N_L$ and $ref\_Q_m$ is as follows.

1) $ref\_N_L$ and $ref\_Q_m$ are determined independently.

The value of $ref\_Q_m$, takes one of modulation orders of multiple scheduled carriers, for example, a maximum value or a minimum value; or, a modulation order of a carrier having the smallest index among the scheduled carriers, or a modulation order of a carrier having the largest carrier index; or, a default value predefined by the network device.

The value of $ref\_N_L$ takes one of layer indications of multiple scheduled carriers, for example, a maximum value or a minimum value; or, a layer indication of a carrier having the smallest carrier index among the scheduled carriers, or a layer indication of a carrier having the largest carrier index; or, a default value predefined by the network device, such as $ref\_N_L$ = 1, or $ref\_N_L$ = 2.

It should be noted that a final result determined by the method 1) needs to make G divisible by a value ($N_L * Q_m$), and the network device needs to set an appropriate value when scheduling a carrier.

2) Parameters $ref\_N_L$ and $ref\_Q_m$ are jointly determined.

When calculating the rate matching output length of the code block, a product of $N_L$ and $Q_m$ may appear at the same time. Therefore, it is not necessary to determine one of the values separately. Instead, the product $ref\_N_L * ref\_Q_m$ is used to determine the final result so that G can be divided by the value ($N_L * Q_m$).

For example, the greatest common divisor method includes: calculating values of $N_L * Q_m$ of all the scheduled carriers, and then taking a greatest common divisor of multiple product values as the product of $ref\_N_L$ and $ref\_Q_m$.

For example, $N_L(0) * Q_m(0)$ = 2 * 4 = 8 (scheduling indication of scheduled carrier 0);

$N_L(1) * Q_m(1)$ = 3 * 4 = 12 (scheduling indication of scheduled carrier 1);
$N_L(2) * Q_m(2)$ = 4 * 6 = 24 (scheduling indication of scheduled carrier 2).

The greatest common divisor of the above products is 4. That is, according to $ref\_N_L * ref\_Q_m$ = 4 , it is substituted into the above formula about $E_r$ for calculation.

3) The network device separately indicates the number of transmission layers $N_L$ and/or the modulation order $Q_m$ used for calculating $E_r$ in the scheduling information.

The separately indicated value of $Q_m$ may be applied in the bit interleaving.

The ref_G is calculated as follows: $ref\_G = \sum_{i=1}^{C} (N_{REavailabe}(i)) * Q_m(i) * v(i)$ , where $N_{REavailabe}(i)$ is a total number of resources actually available for data transmission on a scheduled carrier i.

The method of bit selecting according to a circular buffer length in step E includes: placing N data bits (the output length of the channel coding) into a circular buffer having a length of $N_{cb}$, and then selecting $E_r$ data therefrom.

The process of the performing the bit selection according to the circular buffer length is as follows:

$k = 0$; $j = 0$; //set an initial value of the parameter, $k$ is a counter of a code

block length after rate matching;

if $k <$ E, execute the following process

{

if $d_{(k_0+j)modN_{cd}} \neq< NULL$,

$e_k = d_{(k_0+j)modN_{cd}}$; $k = k + 1$;

//end if (receive a determination condition)

$j = j + 1$;

}//end while, end the loop condition.

Optionally, the performing the bit selection according to the parameter information includes: calculating a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of the radio resources.

In the embodiment, the method for determining the circular buffer length $N_{cb}$ is as follows: if a limited buffer rate matching identification parameter $I_{LBRM} = 0$, then $N_{cb} = N$; otherwise $N_{cb} = min(N, N_{ref})$, where $N$ is an output length of channel coding, for example, $N_r$ is a length of channel coding of a code block r. $N_{ref}$ is a reference value of the circular buffer length. $min(\ )$ means taking a minimum value. $N_{ref} = \left\lfloor \frac{TBS_{LBRM}}{M \cdot R_{LBRM}} \right\rfloor$, where $R_{LBRM} = 2/3$, M is the number of code blocks segmented from the transport block; $TBS_{LBRM}$ is the maximum possible size of the transport block, and the calculation process of $TBS_{LBRM}$ is similar to the above process of calculating the intermediate variable parameter ($N_{info} = N_{RE} \cdot R \cdot Q_m \cdot v$), but parameters used are different.

The parameters used for calculating $TBS_{LBRM}$ include:

a) a coding rate used for calculating the circular buffer length, where the coding rate may be 948 or 1024.
b) a modulation order for calculating the circular buffer length; and
c) the number of MIMO transmission layers used for calculating the circular buffer length.

Optionally, the method further includes at least one of the following:

determining a value of the modulation order used for calculating the circular buffer length according to the parameter information, or determining that a value of the modulation order used for calculating the circular buffer length is a maximum value of the modulation orders corresponding to the at least two scheduled carriers; and
determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

In the embodiment, the modulation order $Q_m$ may be determined according to mcs-Table parameters configured by the network device; for the scheduling of an SCOMX cell, the network device may separately configure $Q_m$ for calculating $N_{cb}$; or, MCS table (mcs-Table) parameters are separately configured for different carriers, and the terminal takes a maximum value of $Q_m$ among multiple carriers when calculating $N_{cb}$.

The number of MIMO transmission layers may be determined according to a configured maximum number of MIMO layers (maxMIMO-Layer). For the scheduling of SCOMX cells, the network device separately configures MIMO layer indication used for calculating $N_{cb}$; or, when the network device separately configures maxMIMO-Layer parameters for different carriers, the terminal takes the maximum maxMIMO-Layer value among multiple carriers when calculating $N_{cb}$.

d) The total number of radio resources.

Optionally, the method further includes: determining the total number of the radio resources used for calculating the circular buffer length to be $156 \times n_{PRB}$, where $n_{PRB}$ is a number of PRBs of all the scheduled carriers, and $n_{PRB} = N_{PRB,LBRM}$, where $N_{PRB,LBRM}$ is a value obtained by converting the number of the PRBs corresponding to all the scheduled carriers, where a manner for determining $N_{PRB,LBRM}$ includes: determining a converted value corresponding to a number of PRBs for each of the scheduled carriers, and determining $N_{PRB,LBRM}$ as a sum of the converted values corresponding to the numbers of PRBs of all the scheduled carriers; or calculating a sum of numbers of PRBs of all the scheduled carriers, and converting the sum of the numbers of PRBs of all the scheduled carriers to obtain a value of $N_{PRB,LBRM}$.

Alternatively, a total number of PRBs of all the scheduled carriers is calculated as $N_{PRB} = \sum_{i=1}^{C} N_{PRB}(i)$, and the total number of PRBs of all the scheduled carriers is converted to obtain a value of $N_{PRB,LBRM}$.

In the embodiment, a correspondence between the number $N_{PRB}$ of PRBs and $N_{PRB,LBRM}$ corresponding to the scheduled carriers is shown in Table 2.

Table 2: correspondence between $PRB$ and $N_{PRB,LBRM}$

| $N_{PRB}$ | $N_{PRB,LBRM}$ |
|---|---|
| less than 33 | 32 |
| 33 to 66 | 66 |
| 67 to 107 | 107 |
| 108 to 135 | 135 |
| 136 to 162 | 162 |
| 163 to 217 | 217 |
| greater than 217 | 273 |

It should be noted that for SCOMX cells, the configured $N_{PRB}$ may be the number of PRBs of a carrier. In a case that the carrier supports configuration of partial bandwidth (Band Width Part, BWP), $N_{PRB}$ may be a maximum value of numbers of PRBs of multiple BWPs configured in a corresponding cell.

As an optional embodiment, the performing the bit interleaving according to the parameter information includes: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to scheduling information and/or configuration information from the network device; or, the value of the modulation order used for the bit interleaving is determined according to a modulation order used for calculating the bit length $E_r$ of the code block. For example, if there is a product of the modulation order and the number of transmission layers (there is a greatest common divisor between the products of modulation orders and numbers of transmission layers indicated by different scheduled carriers), there is no need to calculate the modulation order and the number of transmission layers separately, values of $N_L * Q_m$ of all the scheduled carriers are calculated, and a greatest common divisor of values of multiple products is taken as the product of the modulation order and the number of transmission layers for calculating the bit length $E_r$ of the code block. Accordingly, a minimum $Q_m$ (or a maximum $Q_m$) in the greatest common divisor is used for a modulation order parameter of the bit interleaving process.

In the embodiment, at the transmitter, interleaving is performed on bits after rate matching is performed. An input bit sequence of the interleaving is: $e_0, e_1, e_2, e_3, \ldots, e_{E-1}$. The bit sequence after the interleaving is: $f_0, f_1, f_2, \ldots, f_{E-1}$. The interleaving parameter is related to the length E of the code block and $Q_m$, and is calculated as follows:

$$\text{execute loop (from } j = 0 \text{ to } \frac{E}{Q_m - 1})$$

$$\{$$

$$\text{execute loop (from } i = 0 \text{ to } Q_m - 1)$$

$$f_{i+j \cdot Q_m} = e_{i \cdot \frac{E}{Q_m + j}}$$

$$\}//\text{end the loop.}$$

The method for calculating $Q_m$ used in the above cycle is as follows.

1) The product value of $ref\_N_L * ref\_Q_m$ in the process of calculating the bit length of the code block is used. The advantage of this method is that it can simplify the algorithm and a calculation result of $\frac{E}{Q_m + j}$ is an integer.

2) A value of the modulation order used for the bit interleaving is separately indicated by the network device in scheduling information and/or configuration information.

3) A modulation order with the smallest value among the modulation orders of multiple scheduled carriers indicated by the network device through scheduling information and/or configuration information.

In the embodiments of the present disclosure, the terminal can perform data processing on multiple scheduled carriers according to parameter information of the multiple scheduled carriers transmitted by the network device, and multiple scheduled carriers correspond to the same transport block. The embodiments of the present disclosure provide a bit-level processing procedure in the SCOMX scenario, which can implement a processing technical solution for transmitting one data transport block under conditions where parameters of different carriers may be identical or different, thereby ensuring scheduling flexibility. An appropriate transmission parameter is selected for each carrier according to an actual channel condition, which can effectively improve the transmission efficiency of radio resources. In addition, the present disclosure has relatively small modifications to the protocol, which can minimize the complexity of the terminal.

As shown in FIG. 3, an embodiment of the present disclosure further provides a multi-carrier data processing method, which is applied to a network device, and includes the following steps.

Step 301: determining, by the network device, parameter information corresponding to at least two scheduled carriers, where the at least two scheduled carriers correspond to the same transport block.

In the embodiment, the network device determines parameter information of multiple carriers when scheduling multiple carriers. The multiple scheduled carriers may be multiple carriers in a SCOMX scenario. In the SCOMX scenario, one cell corresponds to multiple carriers, values of the same parameter corresponding to the multiple carriers may be the same or different. For example, modulation orders corresponding to different scheduled carriers may be different, coding rates corresponding to different scheduled carriers may be different, and layer indications (i.e., the number of transmission layers) corresponding to different scheduled carriers may be different.

The parameter information includes at least one of the following:

one or more values of modulation orders;
one or more values of coding rates;
one or more values of numbers of transmission layers; or
one or more values of maximum numbers of MIMO transmission layers.

Step 302: processing, by the network device, the transport block corresponding to the at least two scheduled carriers according to the parameter information.

The parameter information determined by the network device is used by the terminal and the network device to process the transport block when performing scheduling. The network device may process the data corresponding to the parameter information, thereby implementing data processing for multiple scheduled carriers. The data processing may be bit-level processing.

Step 303: transmitting, by the network device, the parameter information to a terminal.

The network device may transmit the parameter information to the terminal through scheduling information and/or configuration information. The scheduling information may be relevant information of carriers scheduled by the network device; the configuration information may be relevant configuration information of carriers scheduled by the network device. The scheduling information and/or the configuration information may indicate parameters of multiple scheduled carriers, and the scheduling information may be, for example, data transmission indication information of multiple carriers. It should be noted that step 303 and step 302 are not sequential, that is, step 302 may be executed before step 303, or step 303 may be executed before step 302, or they may be executed simultaneously, which is not limited here.

It should be noted that steps performed by the network device in the above method embodiments applied to the terminal can all be applied to this embodiment and may achieve the same technical effect.

In an embodiment of the present disclosure, when scheduling multiple carriers, the network device determines the parameter information corresponding to the multiple carriers and sends the parameter information to the terminal. The network device performs bit-level processing according to the parameter information. The embodiment of the present disclosure provides a bit-level processing process in the SCOMX scenario, which can realize a processing technical solution for transmitting a data transport block in a case where different carriers are configured with a same parameter or different parameters, thereby ensuring scheduling flexibility. An appropriate transmission parameter is selected for each carrier according to an actual channel condition, which can effectively improve the transmission efficiency of radio resources. In addition, the present disclosure has relatively small modifications to the protocol, which can minimize the complexity of the terminal.

As an optional embodiment, the processing includes at least one of the following:

(1) calculating a size of the transport block;
(2) determining a channel coding parameter; or
(3) performing rate matching on the code block.

In the embodiment, the processing of the transport block by the network device may include one or more processes such as calculating the size of the transport block, determining the channel coding parameter, and performing rate matching on the code blocks after the transport block is divided.

As an optional embodiment, the processing the transport block corresponding to the at least two scheduled carriers include: calculating the size of the transport block. The calculating the size of the transport block includes: calculating a number of radio resources of the scheduled carriers; determining an intermediate variable parameter according to the number of the radio resources; and determining the size of the transport block according to the intermediate variable parameter.

In the embodiment, the number of the radio resources may be the number of REs. When calculating the size of the transport block, the number of REs included in all scheduled time-domain symbols or all frequency-domain resources may be calculated first. In a case that the network device schedules multiple carriers, a total number of radio resources of all the scheduled carriers is calculated. The network device calculates the intermediate variable parameter $N_{info}$ according to the total number of the radio resources of all the scheduled carriers. When determining the size of the transport block according to the intermediate variable parameter, two methods are included.

Method 1: if the intermediate variable parameter $N_{info} \leq 3824$, a value closest to and not less than $N'_{info}$ is queried according to Table 1 as the size of the transport block. $N_{info}$ is a maximum value of the intermediate variable.

Method 2: if $N_{info} > 3824$, the method for determining the size of the transport block (TBS) is as follows:

determining the intermediate variable $N'_{info} = \max\left(3820,\ 2^n \times \ round\left\lfloor\frac{N_{info}-24}{2^n}\right\rfloor\right)$ , where

$N'_{info} = \max\left(3820,\ 2^n \times round\left\lfloor\frac{N_{info}-24}{2^n}\right\rfloor\right)$ , and $round\lfloor \rfloor$ represents rounding down;

1) if $R \leq \frac{1}{4}$ (R is the coding rate determined according to the scheduling information of the network device),

determining $TBS = 8 \cdot S \left\lceil\frac{N'_{info}+24}{8 \cdot C}\right\rceil - 24$ , where $S = \left\lceil\frac{N'_{info}+24}{3816}\right\rceil$ ; and

2) if $R > \frac{1}{4}$ , and $N'_{info} > 8424$ , determining $TBS = 8 \cdot S \left\lceil\frac{N'_{info}+24}{8 \cdot C}\right\rceil - 24$ , where

$S = \left\lceil\frac{N'_{info}+24}{8424}\right\rceil$ ; otherwise ( $R > \frac{1}{4}$ , and $N'_{info} \leq 8424$ ), determining

$TBS = 8 \cdot \left\lceil\frac{N'_{info}+24}{8}\right\rceil - 24$ .

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

In the embodiment, in a case that the product of the target parameters corresponding to each of the scheduled carriers is the same as the product of target parameters corresponding to each other of the scheduled carriers, the above method is used for calculating the size of the transport block.

Optionally, all the scheduled carriers correspond to one value of a coding rate indicated by the parameter information; the terminal may determine the one value of the coding rate corresponding to all the scheduled carriers according to the parameter information when calculating the size of the transport block. Alternatively, the parameter information indicates a value of a coding rate used for calculating the size of the transport block. That is, an R value used for calculating the size of the transport block is separately indicated in the parameter information transmitted by the network device to the terminal, and the terminal may determine the value of the coding rate used for calculating the size of the transport block according to the scheduling information and/or the configuration information when calculating the size of the transport block.

Optionally, when the network device indicates a coding rate corresponding to each scheduled carrier, the terminal may also determine an R value for all the scheduled carriers according to a predefined rule. For example, an R value of a scheduled carrier having the smallest or largest index is determined as the R value for all the scheduled carriers. Alternatively, for example, a maximum R value, or a minimum R value, or an average value among multiple R values of the multiple scheduled carriers is determined as the R value for all the scheduled carriers.

As another optional embodiment, the calculating the size of the transport block includes: calculating a number of radio resources of the scheduled carriers; determining an intermediate variable parameter according to the number of the radio resources; and determining the size of the transport block according to the intermediate variable parameter.

In the embodiment, the number of radio resources of each scheduled carrier is first calculated, and then the intermediate variable parameter $N_{info}$ of all the scheduled carriers is determined. There are two methods to determine the size of the transport block according to the intermediate variable parameter:

Method (A): when $N_{info} \leq 3824$, using Table 1 to query a value closest to and not less than $N'_{info}$ as the size of the transport block. $N'_{info}$ is a maximum value of $N_{info}$. The calculation method is not repeated here.

Method (B): when $N_{info} > 3824$, the method for determining the transport block size (TBS) includes:

determining an intermediate variable $N'_{info} = \max\left(3820,\ 2^n \times round\left\lfloor \frac{N_{info}-24}{2^n} \right\rfloor\right)$, where

$n = \left\lfloor \log_2\left(N_{info} - 24\right) \right\rfloor - 5$, and *round* $\lfloor \ \rfloor$ represents rounding down;

if $R \leq \frac{1}{4}$ (R is the coding rate determined according to the scheduling information of the network device),

determining $TBS = 8 \cdot S \left\lceil \frac{N'_{info}+24}{8 \cdot C} \right\rceil - 24$, where $S = \left\lceil \frac{N'_{info}+24}{3816} \right\rceil$; and

if $R > \frac{1}{4}$, and $N'_{info} > 8424$, determining $TBS = 8 \cdot S \left\lceil \frac{N'_{info}+24}{8 \cdot C} \right\rceil - 24$, where

$S = \left\lceil \frac{N'_{info}+24}{8424} \right\rceil$; otherwise ($R > \frac{1}{4}$, and $N'_{info} \leq 8424$), determining

$TBS = 8 \cdot \left\lceil \frac{N'_{info}+24}{8} \right\rceil - 24$.

Optionally, in the above embodiment, when calculating the size of the transport block, the parameter information corresponding to the scheduled carrier satisfies the following conditions: products of target parameters corresponding to all the scheduled carriers are different. That is, in the embodiment, when the products of the modulation order, the modulation order, and the number of transmission layers are different for different scheduled carriers, the above method is used for calculating the size of the transport block.

Optionally, in the embodiment, the network device may indicate in the parameter information transmitted to the terminal that values of coding rates corresponding to all the scheduled carriers are different; or, the parameter information indicates that values of coding rates corresponding to all the scheduled carriers are the same; or, the network device separately indicates an R value used for calculating the size of the transport block in the parameter information; or, the network device indicates a value of a coding rate corresponding to each scheduled carrier in the parameter information, and the terminal determines one value of the coding rates corresponding to all the scheduled carriers according to a preset rule. For an example, the R value for all the scheduled carriers is determined to be an R value of a scheduled carrier having the smallest or largest index. For another example, the $R$ value for all the scheduled carriers is determined to be a maximum R value or a minimum R value among multiple R values of the multiple scheduled carriers, or an average value of multiple R values.

As an optional embodiment, the processing the transport block corresponding to the at least two scheduled carriers includes: determining a channel coding parameter, where the determining the channel coding parameter includes at least one of the following: determining a size of the transport block corresponding to an LDPC base graph used for channel coding; or determining a coding rate corresponding to an LDPC base graph used for channel coding.

In the embodiment, the network device and the terminal may perform channel coding according to the size of the transport block and the coding rate. The channel coding includes selecting the LDPC base graph.

The LDPC method is used for channel coding of data. For an initial transmission of the data block, it is necessary to determine and select a base graph (select base graph 1 or select base graph 2) before encoding. The method of selecting the base graph is determined according to the size $A$ of the transport block and the coding rate $R$. The calculation process of the size of the transport block is not described here, and the coding rate $R$ is indicated according to scheduling information and/or configuration information of the network device. Specifically, in a case that the size $A$ of the transport block and the coding rate $R$ satisfy one of the following conditions, the base graph 2 (LDPC base graph 2) is determined as the base graph; otherwise, the base graph 1 (LDPC base graph 1) is determined as the base graph. The conditions are as follows:

1)

$$A \leq 292;$$

2)

$$A \leq 3824 \ \text{and} \ R \leq 0.67;$$

3)

$$R \leq 0.25.$$

Optionally, for the value of A, the method further includes: transmitting indication information to the terminal, the indication information is used to indicate that the size of the transport block is less than or equal to a first threshold, or to indicate that the size of the transport block is greater than a second threshold, and the second threshold is greater than the first threshold. For example, the first threshold is 292, and the second threshold is 3824. When the network device schedules the transport block, if the size A of the scheduled transport block satisfies the condition of $A \leq 292$, or satisfies the condition of A > 3824, the selection of the base graph can be ensured to be independent of the value of the code rate R.

Optionally, for the value of $R$, the coding rates corresponding to all the scheduled carriers are greater than the third threshold; or, the coding rates corresponding to all the scheduled carriers are less than or equal to the fourth threshold. The first threshold may be the highest threshold for the above determination step for $R$ (such as 0.67), and the fourth threshold may be the lowest threshold for the above determination step for $R$ (such as 0.25).

In the embodiment, the $R$ of each of the multiple scheduled carriers indicated by the network device may be greater than the highest threshold in the above determination step (such as greater than 0.67), or may be less than the lowest threshold in the above determination step (such as less than or equal to 0.25).

As an optional embodiment, the processing the transport block corresponding to the at least two scheduled carriers includes: performing rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

In the embodiment, the rate matching includes three sub-processes: calculating the length $E_r$ of the code block, bit selection (Bit selection), and bit interleaving. The process of calculating the length $E_r$ of the code block is not described in detail here.

The method of performing the bit selection according to a circular buffer length in step E includes: placing N data bits (the output length of the channel coding) into a circular buffer having a length of $N_{cb}$, and then selecting $E_r$ data therefrom.

Optionally, the performing the bit selection according to the parameter information includes: calculating a circular buffer length according to the parameter information; and performing the bit selection according to the circular buffer length, where a parameter used for calculating the circular buffer length includes:

    a) a coding rate used for calculating the circular buffer length, where a value of the coding rate may be 948 or 1024;
    b) a modulation order used for calculating the circular buffer length;
    c) a number of MIMO transmission layers used for calculating the circular buffer length; and
    d) a total number of the radio resources.

Optionally, the parameter information indicates the modulation order used for calculating the circular buffer length; or, the parameter information indicates a parameter about a modulation and coding scheme for each of the scheduled carriers separately; and the parameter information is used to indicate the number of MIMO transmission layers used for calculating the circular buffer length; or, the parameter information is used to indicate a number of MIMO transmission layers for each of the scheduled carriers.

In the embodiment, the network device indicates the modulation order used for calculating the circular buffer length in the parameter information transmitted to the terminal, or separately configures $Q_m$ for calculating the circular buffer length $N_{cb}$; or, mcs-Table parameters are configured for different carriers separately, and the terminal takes the largest value of $Q_m$ among multiple carriers when calculating the circular buffer length $N_{cb}$.

In the parameter information transmitted to the terminal, the network device may also indicate a value of the number of MIMO transmission layers used for calculating the circular buffer length, or separately configure MIMO layer indication used for calculating $N_{cb}$; or, separately configure maxMIMO-Layer parameters for different carriers. In this case, the terminal takes a maximum value of the maxMIMO-Layer parameters among multiple carriers when calculating $N_{cb}$.

The total number of the radio resources is calculated according to the correspondence shown in Table 2, and the specific execution process is not repeated here.

Optionally, the performing the bit interleaving according to the parameter information includes: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to a modulation order used for calculating the bit length of the code block.

In an embodiment of the present disclosure, when scheduling multiple carriers, the network device determines parameter information corresponding to the multiple carriers and sends the parameter information to the terminal. The network device performs bit-level processing according to the parameter information. The embodiment of the present disclosure provides a bit-level processing process in the SCOMX scenario, which can realize a processing technical solution for transmitting a data transport block in a case where different carriers are configured with a same parameter or different parameters, thereby ensuring scheduling flexibility. An appropriate transmission parameter is selected for each carrier according to an actual channel condition, which can effectively improve the transmission efficiency of radio resources. In addition, the present disclosure has relatively small modifications to the protocol, which can minimize the complexity of the terminal.

It should be noted here that the above-mentioned method embodiments applied to the network device can implement all the method steps implemented by the network device in the above-mentioned method embodiments applied to the terminal, and can achieve the same technical effect.

The multi-carrier data processing method of the present disclosure have been introduced in above embodiments. The following embodiments will further illustrate the corresponding apparatus in conjunction with the accompanying drawings.

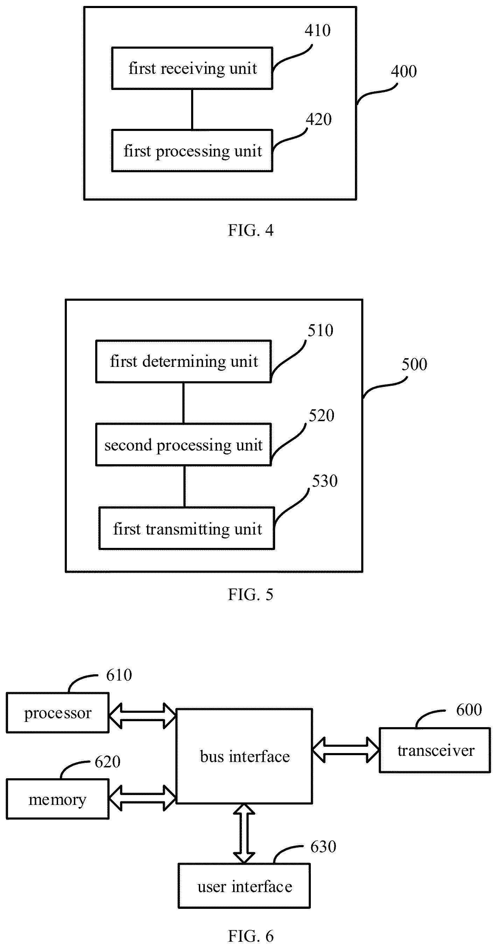

Specifically, as shown in FIG. 4, an embodiment of the present disclosure provides a multi-carrier data processing apparatus 400, which is applied to a terminal, and includes:

    a first receiving unit 410, configured to receive parameter information transmitted by a network device, where the parameter information includes parameter information corresponding to at least two scheduled carriers, and the at least two scheduled carriers correspond to the same transport block; and
    a first processing unit 420, configured to process the transport block corresponding to the at least two scheduled carriers according to the parameter information, where the parameter information includes at least one of the following:
    one or more values of modulation orders;
    one or more values of coding rates;
    one or more values of numbers of transmission layers; or

one or more values of maximum numbers of MIMO transmission layers.

Optionally, the first processing unit is specifically configured to: calculate a size of the transport block, where the calculating the size of the transport block includes: calculating a number of radio resources of the scheduled carriers; determining an intermediate variable parameter according to the number of the radio resources; and determining the size of the transport block according to the intermediate variable parameter.

Optionally, the number of the radio resources of the scheduled carriers is: $N_{RE} = \sum_{i=1}^{C}(N_{RE}(i))$, where $N_{RE}(i) = min(156, N'_{RE}(i)) * n_{PRB}(i)$, C represents a number of the scheduled carriers, and i is an index of a scheduled carrier; $N_{RE}(i)$ is a number of radio resources corresponding to the scheduled carrier i; $n_{PRB}(i)$ represents a number of physical resource blocks (PRBs) of the scheduled carrier i; and $N'_{RE}(i)$ represents a number of resource elements (REs) included in each PRB of the scheduled carrier i.

Optionally, parameters for calculating $N'_{RE}$ corresponding to all the scheduled carriers are different, or parameters for calculating $N'_{RE}$ corresponding to all the scheduled carriers are the same.

Optionally, in a case of calculating the size of the transport block, the parameter information corresponding to the scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a number of transmission layers corresponding to each of the scheduled carriers is the same as a product of a modulation order and a number of transmission layers corresponding to each other of the scheduled carriers.

Optionally, in a case where all the scheduled carriers correspond to a same coding rate, the apparatus further includes: a second determining unit, configured to determine a value of the same coding rate corresponding to all the scheduled carriers according to at least one of the following manners:

determining the value of the coding rate corresponding to all the scheduled carriers according to the parameter information, where values of coding rates of all the scheduled carriers indicated by the parameter information are the same;
determining the value of the coding rate corresponding to all the scheduled carriers according to a preset rule; or,
determining a value of a coding rate used for calculating the size of the transport block according to the parameter information.

Optionally, the first computing subunit is specifically configured to: calculate the intermediate variable parameter for all the scheduled carriers according to the following formula: $N_{info} = \sum_{i=1}^{C}(N_{RE}(i) * R(i) * Q_m(i) * v(i))$, where $N_{info}$ represents the intermediate variable parameter for all the scheduled carriers, $N_{RE}(i)$ is a number of radio resources corresponding to a scheduled carrier i; $R(i)$ is a coding rate corresponding to the scheduled carrier i; $Q_m(i)$ represents a modulation order corresponding to the scheduled carrier i; $v(i)$ represents a number of MIMO transmission layers corresponding to the scheduled carrier i; C represents a number of the scheduled carriers, and i is an index of the scheduled carrier.

Optionally, the first processing unit is specifically configured to: determine a channel coding parameter, where the determining the channel coding parameter includes at least one of the following: determining a size of the transport block corresponding to a low density parity check (LDPC) base graph used for channel coding; or determining a coding rate corresponding to an LDPC base graph used for channel coding.

Optionally, the apparatus further includes: a third receiving unit, configured to receive indication information transmitted by the network device, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the first matching subunit is configured to perform rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the first matching subunit is specifically configured to: calculate a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the apparatus further includes:

a third determining unit, configured to determine a value of the modulation order used for calculating the circular buffer length according to the parameter information, or determine that a value of the modulation order used for calculating the circular buffer length is a maximum value of the modulation orders corresponding to the at least two scheduled carriers; and
a fourth determining unit, configured to determine a number of the MIMO transmission layers used for calculating the circular buffer length according to the parameter information; or, determine that a number of the MIMO transmission layers used for calculating the circular buffer length is a maximum value of the maximum numbers of the MIMO transmission layers corresponding to the at least two scheduled carriers.

Optionally, the apparatus further includes: a fifth determining unit, configured to determine the total number of the radio resources used for calculating the circular buffer length to be $156 \times n_{PRB}$, where $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers, where a manner for determining $N_{PRB,LBRM}$ includes:

determining a converted value corresponding to a number of PRBs of each of the scheduled carriers, and determining $N_{PRB,LBRM}$ as a sum of the converted values corresponding to the numbers of PRBs of all the scheduled carriers; or calculating a sum of numbers of PRBs of all the scheduled carriers, and converting the sum of the numbers of PRBs of all the scheduled carriers to obtain a value of $N_{PRB,LBRM}$.

Optionally, the first matching subunit is specifically configured to: determine a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to scheduling information and/or configuration information from the network device; or, the value of the modulation order used for the bit interleaving is determined according to a modulation order used for calculating the bit length of the code block.

It should be noted that the above apparatus provided in the embodiment of the present disclosure can implement all method steps implemented in the above method embodiments applied to the terminal, and can achieve the same technical effects. Therefore, the part and beneficial effects of this embedment that are the same as the method embodiments will not be described here in detail.

Specifically, as shown in FIG. 5, an embodiment of the present disclosure provides a multi-carrier data processing apparatus 500, which is applied to a network device, and includes:

a first determining unit 510, configured to determine parameter information corresponding to at least two scheduled carriers, where the at least two scheduled carriers correspond to the same transport block;
a second processing unit 520, configured to process the transport block corresponding to the at least two scheduled carriers according to the parameter information; and
a first transmitting unit 530, configured to transmit the parameter information to a terminal, where the parameter information includes at least one of the following:

one or more values of modulation orders;
one or more values of coding rates;
one or more values of numbers of transmission layers; or
one or more values of maximum numbers of MIMO transmission layers.

Optionally, the second processing unit is specifically configured to: calculate a size of the transport block, where the calculating the size of the transport block includes: calculating a number of radio resources of the scheduled carriers; determining an intermediate variable parameter according to the number of the radio resources; and determining the size of the transport block according to the intermediate variable parameter.

Optionally, in a case of calculating the size of the transport block, the parameter information corresponding to the at least two scheduled carriers satisfies the following condition:

a product of target parameters corresponding to each of the scheduled carriers is the same as a product of target parameters corresponding to each other of the scheduled carriers,
where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the parameter information is used to indicate that values of coding rates corresponding to all the scheduled carriers are the same; or, the parameter information is used to indicate a value of a coding rate used for calculating the size of the transport block.

Optionally, the second processing unit is specifically configured to: determine a channel coding parameter, where the determining the channel coding parameter includes at least one of the following: determining a size of the transport block corresponding to an LDPC base graph used for channel coding; or determining a coding rate corresponding to an LDPC base graph used for channel coding.

Optionally, the apparatus further includes: a second transmitting unit, configured to transmit indication information to the terminal, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the second matching subunit is further configured to perform rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the second matching subunit is configured to: calculate a circular buffer length according to the parameter information; and perform the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the parameter information is used to indicate the modulation order used for calculating the circular buffer length; or, the parameter information is used to indicate a parameter of a modulation and coding scheme for each of the scheduled carriers; and the parameter information is used to indicate the number of MIMO transmission layers used for calculating the circular buffer length; or, the parameter information is used to indicate a number of MIMO transmission layers for each of the scheduled carriers.

Optionally, the second matching subunit is configured to: determine a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to a modulation order used for calculating the bit length of the code block.

It should be noted that the above apparatus provided in the embodiment of the present disclosure can implement all method steps implemented in the above method embodiments applied to the network device, and can achieve the same technical effects. Therefore, the part and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

As shown in FIG. 6, an embodiment of the present disclosure further provides a terminal, including: a memory 620, a transceiver 600, and a processor 610; where the memory 620 is configured to store a computer program; the transceiver 600 is configured to receive and transmit data under the control of the processor 610; the processor 610 is configured to read the computer program in the memory to perform the following operations:

receiving parameter information transmitted by a network device, where the parameter information includes parameter information corresponding to at least two scheduled carriers, and the at least two scheduled carriers correspond to the same transport block; and

processing the transport block corresponding to the at least two scheduled carriers according to the parameter information, where the parameter information includes at least one of the following: one or more values of modulation orders; one or more values of coding rates; one or more values of numbers of transmission layers; or one or more values of maximum numbers of multiple input multiple output (MIMO) transmission layers.

Optionally, the processor is configured to read the computer program from the memory to perform the following operations: calculating a size of the transport block, where the calculating the size of the transport block includes:

calculating a number of radio resources of the scheduled carriers;
determining an intermediate variable parameter according to the number of the radio resources; and
determining the size of the transport block according to the intermediate variable parameter.

Optionally, the number of the radio resources of the scheduled carriers is:

$$N_{RE} = \sum_{i=1}^{C} \left( N_{RE}(i) \right) \quad ; \quad N_{RE}(i) = min\left(156, N_{RE}^{'}(i)\right) * n_{PRB}(i)$$

, where $C$ represents a number of the scheduled carriers, and $i$ is an index of a scheduled carrier; $N_{RE}(i)$ is a number of radio resources corresponding to the scheduled carrier $i$; $n_{PRB}(i)$ represents a number of physical resource blocks (PRBs) of the scheduled carrier $i$; and $N_{RE}^{'}(i)$ represents a number of resource elements (REs) included in each PRB of the scheduled carrier $i$.

Optionally, parameters for calculating $N_{RE}^{'}$ corresponding to all the scheduled carriers are different, or parameters for calculating $N_{RE}^{'}$ corresponding to all the scheduled carriers are the same.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers,

where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the processor is configured to read the computer program from the memory to perform the following operations: determining a value of a same coding rate corresponding to all the scheduled carriers according to at least one of the following manners:

determining the value of the coding rate corresponding to all the scheduled carriers according to the parameter information, where values of coding rates of all the scheduled carriers indicated by the parameter information are the same;
determining the value of the coding rate corresponding to all the scheduled carriers according to a preset rule; or, determining a value of a coding rate used for calculating the size of the transport block according to the parameter information.

Optionally, the processor is configured to read the computer program from the memory to perform the following operations: calculating the intermediate variable parameter for all the scheduled carriers according to the following formula: $N_{info} = \sum_{i=1}^{C}(N_{RE}(i) * R(i) * Q_m(i) * v(i))$ , where $N_{info}$ represents the intermediate variable parameter for all the scheduled carriers, and $N_{RE}(i)$ is a number of radio resources corresponding to a scheduled carrier $i$; $R(i)$ is a coding rate corresponding to the scheduled carrier $i$; $Q_m(i)$ represents a modulation order corresponding to the scheduled carrier $i$; $v(i)$ represents a number of MIMO transmission layers corresponding to the scheduled carrier $i$; $C$ represents a number of the scheduled carriers, and $i$ is an index of the scheduled carrier.

Optionally, the processor is configured to read a computer program from the memory and perform the following operations: determining a channel coding parameter, where the determining the channel coding parameter includes at least one of the following: determining a size of the transport block corresponding to a low density parity check (LDPC) base graph used for channel coding; or determining a coding rate corresponding to an LDPC base graph used for channel coding.

Optionally, the processor is configured to read the computer program from the memory to perform the following operations: receiving indication information transmitted by the network device, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processor is configured to read the computer program from the memory to perform the following operations: performing rate matching on the code block; where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

Optionally, the processor is configured to read the computer program from the memory to perform the following operations:

calculating a circular buffer length according to the parameter information; and
performing the bit selection according to the circular buffer length,

where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the processor is configured to read a computer program from the memory and perform at least one of the following operations:

determining a value of the modulation order used for calculating the circular buffer length according to the parameter information, or determining that a value of the modulation order used for calculating the circular buffer length is a maximum value of the modulation orders corresponding to the at least two scheduled carriers; and determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

Optionally, the processor is configured to read the computer program from the memory to perform the following operations: determining the total number of the radio resources used for calculating the circular buffer length to be $156 \times n_{PRB}$, where $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers, where a manner for determining $N_{PRB,LBRM}$ includes: determining a converted value corresponding to a number of PRBs of each of the scheduled carriers, and determining $N_{PRB,LBRM}$ as a sum of the converted values corresponding to the numbers of PRBs of all the scheduled carriers; or calculating a sum of numbers of PRBs of all the scheduled carriers, and converting the sum of the numbers of PRBs of all the scheduled carriers to obtain a value of $N_{PRB,LBRM}$.

Optionally, the processor is configured to read the computer program in the memory and perform the following operations: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to scheduling information and/or configuration information from the network device; or, the value of the modulation order used for the bit interleaving is determined according to a modulation order used for calculating the bit length of the code block.

In FIG. 6, the bus architecture may include any number of interconnected buses and bridges. Specifically, various circuits of one or more processors represented by the processor 610 and a memory represented by the memory 620 are linked together. The bus architecture may also link various other circuits such as peripheral devices, voltage regulators, power management circuits, etc., which are well-known in the art, and therefore, no further descriptions are provided herein. The bus interface provides an interface. The transceiver 600 may be a plurality of elements, that is, include a transmitter and a receiver, and provide a unit for communicating with various other devices on a transmission medium. For different user equipment, the user interface 630 may also be an interface capable of externally or internally connecting to required equipment. The connected equipment includes but not limited to a keypad, a display, a speaker, a microphone, a joystick, and the like.

The processor 610 is responsible for managing the bus architecture and general processing, and the memory 620 may store data used by the processor 610 when performing operations.

Optionally, the processor 610 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present application according to the obtained executable instructions by invoking the computer program stored in the memory. The processor and the memory may also be physically separated.

It should be noted that the above terminal provided in the embodiment of the present disclosure can implement all method steps implemented in the above method embodiments applied to the terminal, and can achieve the same technical effects. Therefore, the description and the beneficial effect of this embedment that are the same as the method embodiments will not be introduced here in detail.

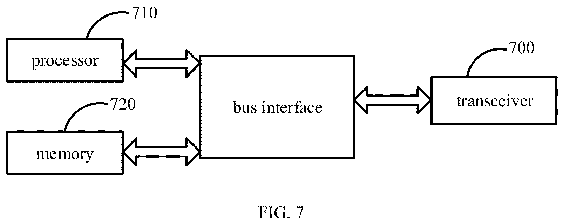

As shown in FIG. 7, an embodiment of the present disclosure further provides a network device, including: a memory 720, a transceiver 700, and a processor 710. The memory 720 is configured to store a computer program; the transceiver 700 is configured to receive and transmit data under the control of the processor 710; the processor 710 is configured to read the computer program in the memory to perform the following operations:

determining parameter information corresponding to at least two scheduled carriers, where the at least two scheduled carriers correspond to the same transport block;

processing, the transport block corresponding to the at least two scheduled carriers according to the parameter information; and

transmitting the parameter information to a terminal, where the parameter information includes at least one of the following:

one or more values of modulation orders;

one or more values of coding rates;

one or more values of numbers of transmission layers; or

one or more values of maximum numbers of MIMO transmission layers.

Optionally, the processor is configured to read the computer program from the memory to perform the following operations: calculating a size of the transport block, where the calculating the size of the transport block includes: calculating a number of radio resources of the scheduled carriers; determining an intermediate variable parameter according to the number of the radio resources; and determining the size of the transport block according to the intermediate variable parameter.

Optionally, in a case of calculating the size of the transport block, the parameter information corresponding to the at least two scheduled carriers satisfies the following condition: a product of target parameters corresponding to each of the scheduled carriers is the same as a product of target parameters corresponding to each other of the scheduled carriers, where the product of the target parameters corresponding to each of the scheduled carriers being the same as the product of the target parameters corresponding to each other of the scheduled carriers includes at least one of the following:

all the scheduled carriers have a same modulation order, a same coding rate, and a same number of transmission layers;

all the scheduled carriers have different modulation orders, different coding rates, and different numbers of transmission layers; or

all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

Optionally, the values of the coding rates corresponding to all the scheduled carriers indicated by the parameter information are the same; or, the parameter information is used to indicate a value of a coding rate used for calculating the size of the transport block.

Optionally, the processor is configured to read the computer program from the memory to perform the following operations: determining a channel coding parameter, where the determining the channel coding parameter includes at least one of the following: determining a size of the transport block corresponding to a low density parity check (LDPC) base graph used for channel coding; or determining a coding rate corresponding to an LDPC base graph used for channel coding.

Optionally, the processor is configured to read the computer program from the memory to perform the following operations: transmitting indication information to the terminal, where the indication information is used to indicate that a size of the transport block is less than or equal to a first threshold, or to indicate that a size of the transport block is greater than a second threshold, where the second threshold is greater than the first threshold.

Optionally, the coding rates corresponding to all the scheduled carriers are greater than a third threshold; or, the coding rates corresponding to all the scheduled carriers are less than or equal to a fourth threshold.

Optionally, the processor is configured to read the computer program from the memory to perform the following operations: performing rate matching on the code block, where the performing the rate matching on the code block includes at least one of the following:

calculating a bit length of the code block subjected to the rate matching according to a reference value of the modulation order, a reference value of the number of transmission layers, and a length of transmission bits obtained on all the scheduled carriers;

performing bit selection according to the parameter information; or

performing bit interleaving according to the parameter information.

Optionally, the performing the bit selection according to the parameter information includes: calculating a circular buffer length according to the parameter information; and performing the bit selection according to the circular buffer length, where a parameter used for calculating the circular buffer length includes: a coding rate used for calculating the circular buffer length, a modulation order used for calculating the circular buffer length, a number of MIMO transmission layers used for calculating the circular buffer length, and a total number of radio resources.

Optionally, the parameter information is used to indicate the modulation order used for calculating the circular buffer length; or, the parameter information is used to indicate a parameter of a modulation and coding scheme for each of the scheduled carriers; and the parameter information is used to indicate the number of MIMO transmission layers used for calculating the circular buffer length; or, the parameter information is used to indicate a number of MIMO transmission layers for each of the scheduled carriers.

Optionally, the processor is configured to read the computer program from the memory to perform the following operations: determining a value of a modulation order used for the bit interleaving, where the value of the modulation order used for the bit interleaving is a minimum value of the one or more values of the modulation orders corresponding to the at least two scheduled carriers; or, the value of the modulation order used for the bit interleaving is determined according to a modulation order used for calculating the bit length of the code block.

In FIG. 7, the bus architecture may include any number of interconnected buses and bridges, specifically, one or more processors represented by processor 710 and various circuits of memory represented by memory 720 are linked together. The bus architecture may also link together various other circuits such as peripherals, voltage regulators, and power management circuits, which are well known in the art and are therefore not further described herein. The bus interface provides an interface. The transceiver 700 may include a plurality of components, namely, a transmitter and a transceiver, providing a unit for communicating with various other devices on a transmission medium. The processor 710 is responsible for managing the bus architecture and general processing, and the memory 720 may store data used by the processor 710 when performing operations.

The processor 710 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above network device provided in the embodiment of the present disclosure can implement all method steps implemented in the above method embodiments applied to the network device, and can achieve the same technical effects. Therefore, the description and the beneficial effect of this embedment that are the same as the method embodiments will not be introduced here in detail.

In addition, a specific embodiment of the present disclosure further provides a processor-readable storage medium, on which a computer program is stored. The program, when executed by the processor, implements steps of the multi-carrier data processing method as described above, and can achieve the same technical effect, which are not repeated here to avoid repetition. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It is noted that the technical solution according to embodiments of the present disclosure may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A multi-carrier data processing method, comprising:

   receiving, by a terminal, parameter information transmitted by a network device; wherein the parameter information includes parameter information corresponding to at least two scheduled carriers, and the at least two scheduled carriers correspond to the same transport block; and
   processing, by the terminal, the transport block corresponding to the at least two scheduled carriers according to the parameter information,
   wherein the parameter information comprises at least one of the following:

   one or more values of modulation orders;
   one or more values of coding rates;
   one or more values of numbers of transmission layers; or
   one or more values of maximum numbers of multiple input multiple output (MIMO) transmission layers.

2. The method according to claim 1, wherein the processing, by the terminal, the transport block corresponding to the at least two scheduled carriers, comprises: calculating a size of the transport block,
   wherein the calculating the size of the transport block comprises:

   calculating a number of radio resources of the scheduled carriers;
   determining an intermediate variable parameter according to the number of the radio resources; and
   determining the size of the transport block according to the intermediate variable parameter.

3. The method according to claim 2, wherein the number of the radio resources of the scheduled carriers is:

$$N_{RE} = \sum_{i=1}^{C}(N_{RE}(i));$$

$$N_{RE}(i) = min\left(156, N_{RE}^{'}(i)\right) * n_{PRB}(i),$$

   wherein C represents a number of the scheduled carriers, $i$ is an index of a scheduled carrier, $N_{RE}(i)$ is a number of radio resources corresponding to the scheduled carrier $i$, $n_{PRB}(i)$ represents a number of physical resource blocks (PRBs) of the scheduled carrier $i$, and $N_{RE}^{'}(i)$ represents a number of resource elements (REs) comprised in each PRB of the scheduled carrier $i$.

4. The method according to claim 3, wherein parameters for calculating $N_{RE}^{'}$ corresponding to all the scheduled carriers are different, or parameters for calculating $N'_{RE}$ corresponding to all the scheduled carriers are the same.

5. The method according to claim 2, wherein in a case of calculating the size of the transport block, the parameter information corresponding to the at least two scheduled carriers satisfies the following condition:

a product of target parameters corresponding to each of the scheduled carriers is the same as a product of target parameters corresponding to each other of the scheduled carriers,
wherein the product of the target parameters corresponding to each of the scheduled carriers being the same as the product of the target parameters corresponding to each other of the scheduled carriers comprises at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a number of transmission layers corresponding to each of the scheduled carriers is the same as a product of a modulation order and a number of transmission layers corresponding to each other of the scheduled carriers.

6. The method according to claim 5, wherein in a case where all the scheduled carriers correspond to a same coding rate, the method further comprises:
determining a value of the same coding rate corresponding to all the scheduled carriers according to at least one of the following manners:

determining the value of the coding rate corresponding to all the scheduled carriers according to the parameter information, wherein values of coding rates of all the scheduled carriers indicated by the parameter information are the same;
determining the value of the coding rate corresponding to all the scheduled carriers according to a preset rule; or,
determining a value of a coding rate used for calculating the size of the transport block according to the parameter information.

7. The method according to claim 2, wherein the determining the intermediate variable parameter for all the scheduled carriers according to the number of the radio resources comprises:
calculating the intermediate variable parameter for all the scheduled carriers according to the following formula:

$$N_{info} = \sum_{i=1}^{C} (N_{RE}(i) * R(i) * Q_m(i) * v(i)),$$

wherein $N_{info}$ represents the intermediate variable parameter for all the scheduled carriers, $N_{RE}(i)$ is a number of radio resources corresponding to a scheduled carrier $i$, $R(i)$ is a coding rate corresponding to the scheduled carrier $i$, $Q_m(i)$ represents a modulation order corresponding to the scheduled carrier $i$, $v(i)$ represents a number of MIMO transmission layers corresponding to the scheduled carrier $i$, $C$ represents a number of the scheduled carriers, and $i$ is an index of the scheduled carrier.

8. The method according to claim 2, wherein the processing the transport block corresponding to the at least two scheduled carriers comprises: determining a channel coding parameter,
wherein the determining the channel coding parameter comprises at least one of the following:

determining a size of the transport block corresponding to a low density parity check (LDPC) base graph used for channel coding; or
determining a coding rate corresponding to an LDPC base graph used for channel coding.

9. The method according to claim 1, further comprising:
receiving indication information transmitted by the network device, wherein the indication information is used to indicate that a size of the transport block is less than or equal to a first threshold, or to indicate that a size of the transport block is greater than a second threshold, wherein the second threshold is greater than the first threshold.

10. The method according to claim 1, wherein the coding rates corresponding to all the scheduled carriers are greater than a third threshold; or, the coding rates corresponding to all the scheduled carriers are less than or equal to a fourth threshold.

11. The method according to claim 1, wherein the processing the transport block corresponding to the at least two scheduled carriers comprises: performing rate matching on the code block,
wherein the performing the rate matching on the code block comprises at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

12. The method according to claim 11, wherein the performing the bit selection according to the parameter information comprises:

calculating a circular buffer length according to the parameter information; and
performing the bit selection according to the circular buffer length,
wherein a parameter used for calculating the circular buffer length comprises: a coding rate used for calculating the circular buffer length, a modulation order used for calculating the circular buffer length, a number of MIMO transmission layers used for calculating the circular buffer length, and a total number of radio resources.

13. The method according to claim 12, further comprising at least one of the following:

determining a value of the modulation order used for calculating the circular buffer length according to the parameter information, or determining that a value of the modulation order used for calculating the circular buffer length is a maximum value of the modulation orders corresponding to the at least two scheduled carriers; and
determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

14. The method according to claim 12, further comprising:

determining the total number of the radio resources used for calculating the circular buffer length to be $156 \times n_{PRB}$, wherein $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers,
wherein a manner for determining $N_{PRB,LBRM}$ comprises:

determining a converted value corresponding to a number of PRBs of each of the scheduled carriers, and determining $N_{PRB,LBRM}$ as a sum of the converted values corresponding to the numbers of PRBs of all the scheduled carriers; or
calculating a sum of numbers of PRBs of all the scheduled carriers, and converting the sum of the numbers of PRBs of all the scheduled carriers to obtain a value of $N_{PRB,LBRM}$.

15. The method according to claim 11, wherein the performing the bit interleaving according to the parameter information comprises:

determining a value of a modulation order used for the bit interleaving,
wherein the value of the modulation order used for the bit interleaving is a minimum value of the one or more values of the modulation orders corresponding to the at least two scheduled carriers; or,
the value of the modulation order used for the bit interleaving is determined according to scheduling information and/or configuration information from the network device; or,
the value of the modulation order used for the bit interleaving is determined according to a modulation order used for calculating the bit length of the code block.

16. A multi-carrier data processing method, comprising:

determining, by a network device, parameter information corresponding to at least two scheduled carriers, wherein the at least two scheduled carriers correspond to the same transport block;

processing, by the network device, the transport block corresponding to the at least two scheduled carriers according to the parameter information; and

transmitting, by the network device, the parameter information to a terminal,

wherein the parameter information comprises at least one of the following:

one or more values of modulation orders;
one or more values of coding rates;
one or more values of numbers of transmission layers; or
one or more values of maximum numbers of MIMO transmission layers.

17. The method according to claim 16, wherein the processing the transport block corresponding to the at least two scheduled carriers comprises: calculating a size of the transport block,

wherein the calculating the size of the transport block comprises:

calculating a number of radio resources of the scheduled carriers;
determining an intermediate variable parameter according to the number of the radio resources; and
determining the size of the transport block according to the intermediate variable parameter.

18. The method according to claim 17, wherein in a case of calculating the size of the transport block, the parameter information corresponding to the at least two scheduled carriers satisfies the following condition:

a product of target parameters corresponding to each of the scheduled carriers is the same as a product of target parameters corresponding to each other of the scheduled carriers,

wherein the product of the target parameters corresponding to each of the scheduled carriers being the same as the product of the target parameters corresponding to each other of the scheduled carriers comprises at least one of the following:

all the scheduled carriers have a same modulation order, a same coding rate, and a same number of transmission layers;

all the scheduled carriers have different modulation orders, different coding rates, and different numbers of transmission layers; or

all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

19. The method according to claim 18, wherein the values of the coding rates corresponding to all the scheduled carriers indicated by the parameter information are the same; or,

the parameter information is used to indicate a value of a coding rate used for calculating the size of the transport block.

20. The method according to claim 16, wherein the processing the transport block corresponding to the at least two scheduled carriers comprises: determining a channel coding parameter,

wherein the determining the channel coding parameter comprises at least one of the following:

determining a size of the transport block corresponding to an LDPC base graph used for channel coding; or
determining a coding rate corresponding to an LDPC base graph used for channel coding.

21. The method according to claim 16, further comprising:
transmitting indication information to the terminal, wherein the indication information is used to indicate that a size of the transport block is less than or equal to a first threshold, or to indicate that a size of the transport block is greater than a second threshold, wherein the second threshold is greater than the first threshold.

22. The method according to claim 16, wherein the coding rates corresponding to all the scheduled carriers are greater than a third threshold; or, the coding rates corresponding to all the scheduled carriers are less than or equal to a fourth threshold.

**23.** The method according to claim 16, wherein the processing the transport block corresponding to the at least two scheduled carriers comprises: performing rate matching on the code block,
wherein the performing the rate matching on the code block comprises at least one of the following:

calculating a bit length of the code block subjected to the rate matching according to a reference value of the modulation order, a reference value of the number of transmission layers, and a length of transmission bits obtained on all the scheduled carriers;
performing bit selection according to the parameter information; or
performing bit interleaving according to the parameter information.

**24.** The method according to claim 23, wherein the performing the bit selection according to the parameter information comprises:

calculating the circular buffer length according to the parameter information; and
performing the bit selection according to the circular buffer length,
wherein a parameter used for calculating the circular buffer length comprises: a coding rate used for calculating the circular buffer length, a modulation order used for calculating the circular buffer length, a number of MIMO transmission layers used for calculating the circular buffer length, and a total number of radio resources.

**25.** The method according to claim 24, wherein the parameter information is used to indicate the modulation order used for calculating the circular buffer length; or, the parameter information is used to indicate a parameter of a modulation and coding scheme for each of the scheduled carriers; and
the parameter information is used to indicate the number of MIMO transmission layers used for calculating the circular buffer length; or, the parameter information is used to indicate a number of MIMO transmission layers for each of the scheduled carriers.

**26.** The method according to claim 23, wherein the performing the bit interleaving according to the parameter information comprises:

determining a value of a modulation order used for the bit interleaving,
wherein the value of the modulation order used for the bit interleaving is a minimum value of the one or more values of the modulation orders corresponding to the at least two scheduled carriers; or,
the value of the modulation order used for the bit interleaving is determined according to a modulation order used for calculating the bit length of the code block.

**27.** A terminal, comprising: a memory, a transceiver and a processor,
wherein the memory is configured to store a computer program; the transceiver is configured to receive and transmit data under the control of the processor; and the processor is configured to read the computer program from the memory to perform the following operations:

receiving parameter information transmitted by a network device, wherein the parameter information comprises parameter information corresponding to at least two scheduled carriers, and the at least two scheduled carriers correspond to the same transport block; and
processing the transport block corresponding to the at least two scheduled carriers according to the parameter information,
wherein the parameter information comprises at least one of the following:

one or more values of modulation orders;
one or more values of coding rates;
one or more values of numbers of transmission layers; or
one or more values of maximum numbers of multiple input multiple output (MIMO) transmission layers.

**28.** The terminal according to claim 27, wherein the processor is configured to read the computer program from the memory to perform the following operations: calculating a size of the transport block,
wherein the calculating the size of the transport block comprises:

calculating a number of radio resources of the scheduled carriers;
determining an intermediate variable parameter according to the number of the radio resources; and

determining the size of the transport block according to the intermediate variable parameter.

29. The terminal according to claim 28, wherein the number of the radio resources of the scheduled carriers is:

$$N_{RE} = \sum_{i=1}^{C} (N_{RE}(i));$$

$$N_{RE}(i) = min\left(156, N'_{RE}(i)\right) * n_{PRB}(i),$$

wherein $C$ represents a number of the scheduled carriers, $i$ is an index of a scheduled carrier, $N_{RE}(i)$ is a number of radio resources corresponding to the scheduled carrier $i$, $n_{PRB}(i)$ represents a number of physical resource blocks (PRBs) of the scheduled carrier $i$, and $N'_{RE}(i)$ represents a number of resource elements (REs) comprised in each PRB of the scheduled carrier $i$.

30. The terminal according to claim 29, wherein parameters for calculating $N'_{RE}$ corresponding to all the scheduled carriers are different, or parameters for calculating $N'_{RE}$ corresponding to all the scheduled carriers are the same.

31. The terminal according to claim 28, wherein in a case of calculating the size of the transport block, the parameter information corresponding to the at least two scheduled carriers satisfies the following condition:

a product of target parameters corresponding to each of the scheduled carriers is the same as a product of target parameters corresponding to each other of the scheduled carriers,
wherein the product of the target parameters corresponding to each of the scheduled carriers being the same as the product of the target parameters corresponding to each other of the scheduled carriers comprises at least one of the following:

all the scheduled carriers have a same modulation order, a same coding rate, and a same number of transmission layers;
all the scheduled carriers have different modulation orders, different coding rates, and different numbers of transmission layers; or
all the scheduled carriers have different modulation orders, different coding rates, and a same number of transmission layers, and a product of a modulation order and a transmission layer corresponding to each of the scheduled carriers is the same as a product of a modulation order and a transmission layer corresponding to each other of the scheduled carriers.

32. The terminal according to claim 31, wherein the processor is configured to read the computer program from the memory to perform the following operations:
determining a value of a same coding rate corresponding to all the scheduled carriers according to at least one of the following manners:

determining the value of the coding rate corresponding to all the scheduled carriers according to the parameter information, wherein values of coding rates of all the scheduled carriers indicated by the parameter information are the same;
determining the value of the coding rate corresponding to all the scheduled carriers according to a preset rule; or,
determining a value of a coding rate used for calculating the size of the transport block according to the parameter information.

33. The terminal according to claim 28, wherein the processor is configured to read the computer program from the memory to perform the following operations:
calculating the intermediate variable parameter for all the scheduled carriers according to the following formula:

$$N_{info} = \sum_{i=1}^{C} (N_{RE}(i) * R(i) * Q_m(i) * v(i)) \ ,$$

wherein $N_{info}$ represents the intermediate variable parameter for all the scheduled carriers, and $N_{RE}(i)$ is a number of radio resources corresponding to a scheduled carrier $i$; $R(i)$ is a coding rate corresponding to the scheduled carrier $i$; $Q_m(i)$ represents a modulation order corresponding to the scheduled carrier $i$; $v(i)$ represents a number of MIMO transmission layers corresponding to the scheduled carrier $i$; $C$ represents a number of the scheduled carriers, and $i$ is an index of the scheduled carrier.

34. The terminal according to claim 28, wherein the processor is configured to read a computer program from the memory and perform the following operations: determining a channel coding parameter,
wherein the determining the channel coding parameter comprises at least one of the following:

> determining a size of the transport block corresponding to a low density parity check (LDPC) base graph used for channel coding; or
> determining a coding rate corresponding to an LDPC base graph used for channel coding.

35. The terminal according to claim 27, wherein the processor is configured to read the computer program from the memory to perform the following operations:
receiving indication information transmitted by the network device, wherein the indication information is used to indicate that a size of the transport block is less than or equal to a first threshold, or to indicate that a size of the transport block is greater than a second threshold, wherein the second threshold is greater than the first threshold.

36. The terminal according to claim 27, wherein the coding rates corresponding to all the scheduled carriers are greater than a third threshold; or, the coding rates corresponding to all the scheduled carriers are less than or equal to a fourth threshold.

37. The terminal according to claim 27, wherein the processor is configured to read the computer program from the memory to perform the following operations: performing rate matching on the code block;
wherein the performing the rate matching on the code block comprises at least one of the following:

> calculating a bit length of the code block subjected to the rate matching according to a reference value of the modulation order, a reference value of the number of transmission layers, and a length of transmission bits obtained on all the scheduled carriers;
> performing bit selection according to the parameter information; or
> performing bit interleaving according to the parameter information.

38. The terminal according to claim 37, wherein the processor is configured to read the computer program from the memory to perform the following operations:

> calculating a circular buffer length according to the parameter information; and
> performing the bit selection according to the circular buffer length,
> wherein a parameter used for calculating the circular buffer length comprises: a coding rate used for calculating the circular buffer length, a modulation order used for calculating the circular buffer length, a number of MIMO transmission layers used for calculating the circular buffer length, and a total number of radio resources.

39. The terminal according to claim 38, wherein the processor is configured to read a computer program from the memory and perform at least one of the following operations:

> determining a value of the modulation order used for calculating the circular buffer length according to the parameter information, or determining that a value of the modulation order used for calculating the circular buffer length is a maximum value of the modulation orders corresponding to the at least two scheduled carriers; and
> determining a number of the MIMO transmission layers used for calculating the circular buffer length according to the parameter information; or, determining that a number of the MIMO transmission layers used for calculating the circular buffer length is a maximum value of the maximum numbers of the MIMO transmission layers corresponding to the at least two scheduled carriers.

40. The terminal according to claim 38, wherein the processor is configured to read the computer program from the memory to perform the following operations:

> determining the total number of the radio resources used for calculating the circular buffer length to be $156 \times$

$n_{PRB}$, wherein $n_{PRB}$ is a number of PRBs of all the scheduled carriers, and $n_{PRB} = N_{PRB,LBRM}$, and $N_{PRB,LBRM}$ is a value obtained by converting the number of the PRBs corresponding to all the scheduled carriers, wherein a manner for determining $N_{PRB,LBRM}$ comprises:

determining a converted value corresponding to a number of PRBs of each of the scheduled carriers, and determining $N_{PRB,LBRM}$ as a sum of the converted values corresponding to the numbers of PRBs of all the scheduled carriers; or
calculating a sum of numbers of PRBs of all the scheduled carriers, and converting the sum of the numbers of PRBs of all the scheduled carriers to obtain a value of $N_{PRB,LBRM}$.

41. The terminal according to claim 37, wherein the processor is configured to read the computer program in the memory and perform the following operations: determining a value of a modulation order used for the bit interleaving,

wherein the value of the modulation order used for the bit interleaving is a minimum value of the one or more values of the modulation orders corresponding to the at least two scheduled carriers; or,
the value of the modulation order used for the bit interleaving is determined according to scheduling information and/or configuration information from the network device; or,
the value of the modulation order used for the bit interleaving is determined according to a modulation order used for calculating the bit length of the code block.

42. A network device, comprising: a memory, a transceiver and a processor,
wherein the memory is configured to store a computer program; the transceiver is configured to receive and transmit data under the control of the processor; and the processor is configured to read the computer program from the memory to perform the following operations:

determining parameter information corresponding to at least two scheduled carriers, wherein the at least two scheduled carriers correspond to the same transport block;
processing, the transport block corresponding to the at least two scheduled carriers according to the parameter information; and
transmitting the parameter information to a terminal,
wherein the parameter information comprises at least one of the following:

one or more values of modulation orders;
one or more values of coding rates;
one or more values of numbers of transmission layers; or
one or more values of maximum numbers of MIMO transmission layers.

43. A multi-carrier data processing apparatus, comprising:

a first receiving unit, configured to receive parameter information transmitted by a network device, wherein the parameter information comprises parameter information corresponding to at least two scheduled carriers, and the at least two scheduled carriers correspond to the same transport block; and
a first processing unit, configured to process the transport block corresponding to the at least two scheduled carriers according to the parameter information,
wherein the parameter information comprises at least one of the following:

one or more values of modulation orders;
one or more values of coding rates;
one or more values of numbers of transmission layers; or
one or more values of maximum numbers of MIMO transmission layers.

44. A multi-carrier data processing apparatus, comprising:

a first determining unit, configured to determine parameter information corresponding to at least two scheduled carriers, wherein the at least two scheduled carriers correspond to the same transport block;
a second processing unit, configured to process the transport block corresponding to the at least two scheduled carriers according to the parameter information; and
a first transmitting unit, configured to transmit the parameter information to a terminal,

wherein the parameter information comprises at least one of the following:

one or more values of modulation orders;
one or more values of coding rates;
one or more values of numbers of transmission layers; or
one or more values of maximum numbers of MIMO transmission layers.

45. A processor readable storage medium, wherein the processor-readable storage medium stores a computer program, and the computer program is executed by a processor to perform steps of the multi-carrier data processing method according to any one of claims 1 to 15, or to perform steps of the multi-carrier data processing method according to any one of claims 16 to 26.

receiving, by the terminal, parameter information transmitted by a network-side device, where the parameter information includes parameter information corresponding to at least two scheduled carriers, and the at least two scheduled carriers correspond to a same transport block

101

processing, by the terminal, the transport block corresponding to the at least two scheduled carriers according to the parameter information

102

FIG. 1

aggregated carrier & aggregated carrier index

one serving cell

| 0 | 1 | 2 | 3 |

（5MHz） （2MHz） （2MHz） （3MHz）

frequency domain (F)

FIG. 2

determining, by the network-side device, parameter information corresponding to at least two scheduled carriers, where the at least two scheduled carriers correspond to a same transport block

301

processing, by the network-side device, the transport block corresponding to the at least two scheduled carriers according to the parameter information

302

transmitting, by the network-side device, the parameter information to a terminal

303

FIG. 3

first receiving unit — 410

first processing unit — 420

400

FIG. 4

first determining unit — 510

second processing unit — 520

first transmitting unit — 530

500

FIG. 5

processor — 610

memory — 620

bus interface

transceiver — 600

user interface — 630

FIG. 6

```
                    ╭─710
       ┌─────────────┐                    ╭─700
       │  processor  │⟺          ┌───────────────┐    ┌──────────────┐
       └─────────────┘           │               │⟺│  transceiver │
                    ╭─720        │ bus interface │    └──────────────┘
       ┌─────────────┐           │               │
       │   memory    │⟺          │               │
       └─────────────┘           └───────────────┘
```

FIG. 7

## INTERNATIONAL SEARCH REPORT

| International application No. |
|---|
| **PCT/CN2024/072435** |

### A. CLASSIFICATION OF SUBJECT MATTER

H04W 72/0453(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, USTXT, EPTXT, WOTXT: MCS, 编码, 速率, 参数, 层数, 传输, 传输块, 调制, 阶数, 多, 载波, 服务小区, 两, 小区, 最大, MAX, MCS, MIMO, SCOMX, TB, trans+, block

### C. DOCUMENTS CONSIDERED TO BE RELEVANT

| Category* | Citation of document, with indication, where appropriate, of the relevant passages | Relevant to claim No. |
|---|---|---|
| Y | WO 2022066599 A1 (YI, Y. J. et al.) 31 March 2022 (2022-03-31)<br>description, paragraphs [239]-[276], and claims 106 and 125 | 1-2, 8-11, 15-17, 20-23, 26-28, 34-37, 41-45 |
| Y | US 2022400512 A1 (SAMSUNG ELECTRONICS CO., LTD.) 15 December 2022 (2022-12-15)<br>description, paragraphs [0092], [0306], and [0361]-[0374], and tables 3 and 22 | 1-2, 8-11, 15-17, 20-23, 26-28, 34-37, 41-45 |
| A | CN 110535570 A (ZTE CORP.) 03 December 2019 (2019-12-03)<br>entire document | 1-45 |
| A | CN 110679108 A (HUAWEI TECHNOLOGIES CO., LTD.) 10 January 2020 (2020-01-10)<br>entire document | 1-45 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 March 2024** | **02 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/072435**

| Patent document cited in search report | | | Publication date (day/month/year) | Patent family member(s) | | | Publication date (day/month/year) |
|---|---|---|---|---|---|---|---|
| WO | 2022066599 | A1 | 31 March 2022 | US | 2023217456 | A1 | 06 July 2023 |
| US | 2022400512 | A1 | 15 December 2022 | WO | 2021162484 | A2 | 19 August 2021 |
| | | | | KR | 20210102745 | A | 20 August 2021 |
| CN | 110535570 | A | 03 December 2019 | US | 2022116171 | A1 | 14 April 2022 |
| | | | | WO | 2020147764 | A1 | 23 July 2020 |
| | | | | EP | 3913834 | A1 | 24 November 2021 |
| CN | 110679108 | A | 10 January 2020 | US | 2020068562 | A1 | 27 February 2020 |
| | | | | EP | 3618333 | A1 | 04 March 2020 |
| | | | | WO | 2018201505 | A1 | 08 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310073582